# EUROPEAN PATENT APPLICATION

(11) **EP 4 485 910 A1**
(43) Date of publication of application: **01.01.2025**
(21) Application number: 23791086.4
(22) Date of filing: 11.04.2023
(51) Int. Cl.: H04M 1/72439, G10L 25/51

(54) **DIRECTIONAL SOUND PICKUP METHOD, AND DEVICE**

(30) Priority: 19.04.2022 CN 202210410808
(71) Applicant: Huawei Technologies Co., Ltd., Shenzhen, Guangdong 518129 (CN)
(72) Inventor: HUANG, Ningjie, Shenzhen, Guangdong 518129 (CN)
(74) Representative: Maiwald GmbH
(86) International application number: PCT/CN2023/087647
(87) International publication number: WO 2023/202431

(57) **Abstract**

This application discloses a directional sound pickup method and a device, and relates to the field of terminal technologies, to conveniently implement targeted sound pickup for one or more targets without affecting video recording. In this application, when a user has a video recording requirement and/or an audio recording requirement, an electronic device may identify a directional sound pickup target of the user based on an operation of conveniently selecting a target shot object (or a region) in a viewfinder frame by the user, so that during audio recording, a sound signal from a target concerned by the user is picked up in a targeted manner, for example, a sound intensity of the directional sound pickup target is enhanced and/or a sound intensity of another target is weakened, or a sound intensity of another target is not picked up. According to the directional sound pickup method provided in this application, more user-friendly sound pickup experience can be provided for the user.

## Description

This application claims priority to Chinese Patent Application No. 202210410808.1, filed with the China National Intellectual Property Administration on April 19, 2022 and entitled "DIRECTIONAL SOUND PICKUP METHOD AND DEVICE", which is incorporated herein by reference in its entirety.

### TECHNICAL FIELD

This application relates to the field of terminal technologies, and in particular, to a directional sound pickup method and a device.

### BACKGROUND

With development of a video recording function of an electronic device, an increasing quantity of users are accustomed to recording life or sharing fun in a video recording manner. As a manner of recording life and sharing fun in real time, video recording, video calls, and other image-based manners are popular among an increasing quantity of users.

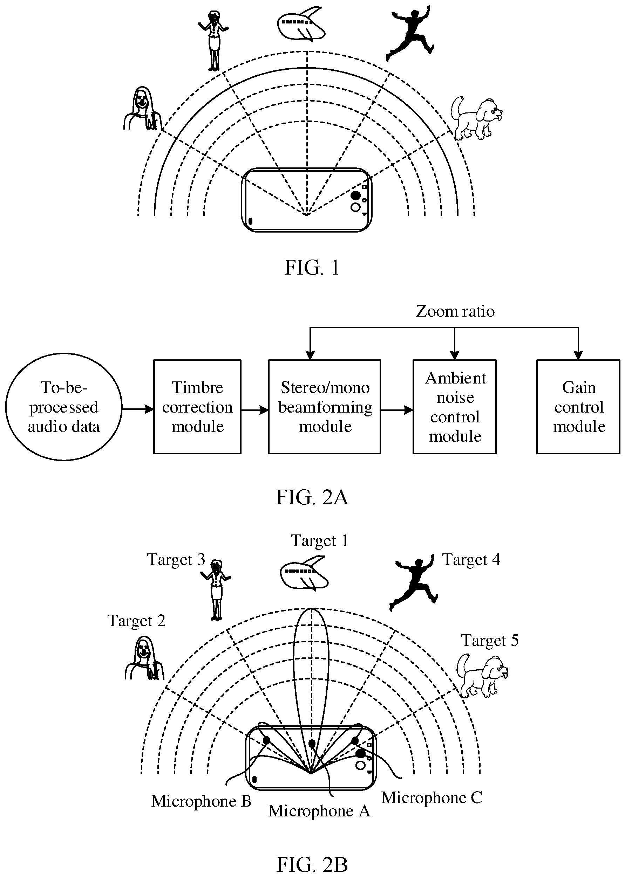

During actual use, as shown in FIG. 1, in a process of video recording, a video call, or the like, an electronic device usually picks up a sound (for example, including a human sound, an animal sound, and a vehicle sound shown in FIG. 1) from an environment by using a sound pickup microphone.

However, an application scenario like video recording or a video call is usually complex, for example, usually includes various sound sources. In the foregoing method, an omnidirectional microphone usually picks up sound signals (also referred to as audio signals), including noises, from all directions in the environment in an undifferentiated manner according to an omnidirectional sound pickup principle. Therefore, this manner usually cannot meet a special requirement of a user. For example, it is assumed that the user uses the electronic device to record a video or make a video call in a concert scenario. In addition to instrumental performance sounds and the like of the concert, sounds picked up by the electronic device further include cheering sounds of audiences, walking sounds of staff, and the like. However, the user expects that the electronic device shoots only the performance sounds of the concert. The sounds such as the cheering sounds of the audiences and the walking sounds of the staff in the environment are noises for the user, and the user does not expect to pick up the noises.

### SUMMARY

This application provides a directional sound pickup method and a device, to conveniently implement targeted sound pickup for one or more targets without affecting video recording.

To achieve the foregoing objective, the following technical solutions are used in embodiments of this application.

According to a first aspect, a directional sound pickup method is provided. The method includes: An electronic device detects a first operation of a user. The electronic device displays, in response to the first operation, a viewfinder frame corresponding to image shooting, where the viewfinder frame includes a plurality of target shot objects, and the plurality of target shot objects include a first target shot object and a second target shot object. The electronic device detects a second operation of selecting the first target shot object by the user. The electronic device shoots a video corresponding to the viewfinder frame, and obtains a corresponding audio, where at a first moment at which the video is shot, an intensity of a sound corresponding to the first target shot object is D1, and an intensity of a sound corresponding to the second target shot object is D2. The audio is played when the shot video is played, where when the audio is played to a moment corresponding to the first moment, a sound intensity of the sound corresponding to the first target shot object is D11, and a sound intensity of the sound corresponding to the second target shot object is D11, where a ratio of D11 to D1 is greater than a ratio of D21 to D2.

In a possible example, the plurality of target shot objects further include a third target shot object. At the first moment at which the video is shot, an intensity of a sound corresponding to the third target shot object is D3. When the audio is played to the moment corresponding to the first moment, a sound intensity of the sound corresponding to the third target shot object is D31, where the ratio of D11 to D1 is greater than a ratio of D31 to D3. Optionally, the ratio of D21 to D2 is equal to the ratio of D31 to D3.

In a possible example, the second operation may be further used to select a target on which a camera focuses, so that camera focusing can match recording positioning.

In the solution provided in the first aspect, when the user has a video recording requirement, the electronic device may identify a directional sound pickup target of the user based on an operation of conveniently selecting a target shot object in the viewfinder frame by the user, so that during video recording, a sound signal from a target concerned by the user is picked up in a targeted manner, and a sound signal from another target is weakened. According to the directional sound pickup method provided in this application, more user-friendly sound pickup experience can be provided for the user.

In a possible implementation, D11 and D21 are respectively the intensity of the sound of the first target shot object and the intensity of the sound of the second target shot object that are obtained by the electronic device. In other words, the electronic device may support using an intensity of a sound of each target shot object picked up by the electronic device as an intensity of a sound of each target shot object during video playing.

In a possible implementation, D21 is 0. In the directional sound pickup solution provided in this application, when performing video recording, the electronic device may pick up, in a targeted manner, only the sound signal from the target concerned by the user, and does not pick up the sound signal from the another target, to provide more user-friendly sound pickup experience for the user.

In a possible implementation, D21 is greater than 0. When performing video recording, the electronic device may enhance, in a targeted manner, the sound signal from the target concerned by the user, and/or weaken the sound signal from the another target, to provide more user-friendly sound pickup experience for the user.

In a possible implementation, in a process in which the electronic device shoots the video, a position of the first target shot object changes; at a second moment at which the video is shot, an intensity of the sound corresponding to the first target shot object is D1', an intensity of the sound corresponding to the second target shot object is D2', and the second moment is after a moment at which the position of the first target shot object changes; and the audio is played when the shot video is played, where when the audio is played to a moment corresponding to the second moment, a sound intensity of the sound corresponding to the first target shot object is D11', and a sound intensity of the sound corresponding to the second target shot object is D11', where a ratio of D11' to D1' is greater than a ratio of D21' to D2'. The directional sound pickup solution provided in this application supports tracking audio pickup on the target concerned by the user (for example, a target selected by the user), to avoid a problem that directional pickup of a sound of the target concerned by the user cannot be continuously provided for the user due to movement of the target.

In some possible embodiments, focus tracking of the camera (focusing of the camera changes as the target moves) matches recording tracking. In other words, if a target of focus tracking of the camera changes, a direction of recording tracking changes.

Optionally, a ratio of D11' to D1' is equal to the ratio of D11 to D1. To be specific, when a position of the target concerned by the user (for example, the target selected by the user) changes, the electronic device may keep an unchanged enhancement ratio to continuously pick up the sound signal of the target concerned by the user.

In a possible implementation, the shot video includes an image of the first target shot object and an image of the second target shot object.

In a possible implementation, the method further includes: The electronic device plays an audio of the first target shot object and an audio of the second target shot object in response to an operation of selecting the first target shot object and the second target shot object on a video playing interface of the video. In the directional sound pickup solution provided in this application, when the shot video is played back, the user may select audios of specific targets to be played. This solution can provide more diversified audio playing experience for the user.

In a possible implementation, before the electronic device shoots the video corresponding to the viewfinder frame, and obtains the corresponding audio, the method further includes: The electronic device detects an operation of selecting a directional sound pickup mode by the user. In the directional sound pickup solution provided in this application, the electronic device may provide a plurality of sound pickup mode options, including the directional sound pickup mode option, so that the user selects a corresponding sound pickup mode based on an actual requirement. This solution can provide more diversified sound pickup experience for the user.

In a possible implementation, the first target shot object is a target shot object on which the electronic device automatically focuses in the viewfinder frame. It may be understood that, the target shot object on which the electronic device automatically focuses is usually a target with high user attention in the viewfinder frame. Based on this, in the directional sound pickup solution provided in this application, directional sound pickup may be performed based on the target shot object on which the electronic device automatically focuses, to improve automation and intelligence of directional sound pickup.

In a possible implementation, the viewfinder frame includes a first region and a second region, the first target shot object is located in the first region, the second target shot object is located in the second region, and the second operation is an operation of selecting the first region by the user. The directional sound pickup solution provided in this application may support the user in determining the directional sound pickup target by selecting a region in the viewfinder frame, to improve diversity of execution manners of the solution. For example, the second operation of selecting the first target shot object by the user is an operation of selecting, by the user, a region (for example, the first region) in which the first target shot object is located.

For example, the first region may include one or more target shot objects.

In a possible implementation, before the electronic device detects the second operation, the method further includes: The electronic device displays a plurality of sound pickup partition options; and the electronic device displays a first region mark and a second region mark in the viewfinder frame in response to an operation of selecting a first sound pickup partition option in the plurality of sound pickup partition options by the user. The second operation is an operation of tapping, by the user, a position corresponding to the first region mark. The directional sound pickup solution provided in this application may support a plurality of sound pickup partition division manners, so that the user can specify the directional sound pickup target based on an actual requirement by selecting a pickup partition in the plurality of division manners.

In a possible implementation, the plurality of sound pickup partition options include one or more of the following: a two-partition option, a four-partition option, a nine-partition option, an intelligent partition option, and an irregular partition option. The directional sound pickup solution provided in this application may support a plurality of sound pickup partition division manners, so that the user can specify the directional sound pickup target based on an actual requirement by selecting a pickup partition in the plurality of division manners.

In a possible implementation, the method further includes: The electronic device determines the intelligent partition option based on a position of a target shot object in the viewfinder frame. The directional sound pickup solution provided in this application may support the electronic device in determining a sound pickup partition division manner based on the position of the target shot object in the viewfinder frame, to increase automation and intelligence of sound pickup partition division.

In a possible implementation, the electronic device includes a first camera, and that the electronic device shoots a video corresponding to the viewfinder frame includes: The electronic device shoots, by using the first camera, a single channel of video corresponding to the viewfinder frame. The directional sound pickup solution provided in this application may support a scenario in which a single channel of video is shot, for example, may support a scenario in which a single channel of video is shot by using one camera.

In a possible implementation, the electronic device includes a first camera, and that the electronic device shoots a video corresponding to the viewfinder frame includes: The electronic device shoots, by using the first camera, a plurality of channels of videos corresponding to the viewfinder frame, where zoom ratios of the plurality of channels of videos are different. The directional sound pickup solution provided in this application may support a scenario in which a plurality of channels of videos are shot, for example, may support a scenario in which a plurality of channels of videos with different zoom ratios are shot by using one camera.

In a possible implementation, the electronic device includes a first camera and a second camera, and that the electronic device shoots a video corresponding to the viewfinder frame includes: The electronic device shoots, by using the first camera, a first channel of video corresponding to the viewfinder frame, and shoots, by using the second camera, a second channel of video corresponding to the viewfinder frame. The directional sound pickup solution provided in this application may support a scenario in which a plurality of channels of videos are shot, for example, may support a scenario in which one channel of video is shot by using two cameras separately.

In a possible implementation, zoom ratios of the first channel of video and the second channel of video are different. The directional sound pickup solution provided in this application may support a scenario in which one channel of video is shot by using two cameras separately, where zoom ratios of two channels of videos obtained through shooting are different.

In a possible implementation, the viewfinder frame is located on an image shooting preview interface in an image shooting scenario; or the viewfinder frame is located on an image shooting interface in a video call scenario. The directional sound pickup solution provided in this application is applicable to the image shooting scenario, or is applicable to the video call scenario.

According to a second aspect, a directional sound pickup method is provided. The method includes: An electronic device detects a first operation of a user. The electronic device displays, in response to the first operation, a viewfinder frame corresponding to image shooting, where the viewfinder frame includes a plurality of target shot objects, and the plurality of target shot objects include a first target shot object and a second target shot object. The electronic device detects a second operation of selecting the first target shot object by the user. The electronic device shoots a video corresponding to the viewfinder frame, and directionally obtains an audio of the first target shot object.

In an example, the electronic device may directionally obtain the audio of the first target shot object in a manner of enhancing an audio intensity of a sound corresponding to the first target shot object and/or weakening an audio intensity of a sound corresponding to the second target shot obj ect.

In another example, the electronic device may directionally obtain the audio of the first target shot object in a manner of picking up only a sound of the first target shot object, and not picking up a sound of another target shot object (including the second target shot object).

In the solution provided in the second aspect, when the user has a video recording requirement, the electronic device may identify a directional sound pickup target of the user based on an operation of conveniently selecting a target shot object in the viewfinder frame by the user, so that during video recording, a sound signal from a target concerned by the user is picked up in a targeted manner, and a sound signal from another target is weakened. According to the directional sound pickup method provided in this application, more user-friendly sound pickup experience can be provided for the user.

In a possible implementation, when a position of the first target shot object in the viewfinder frame changes, a sound pickup direction of the electronic device changes with the first target shot object. The directional sound pickup solution provided in this application supports tracking audio pickup on the target concerned by the user (for example, a target selected by the user), to avoid a problem that directional pickup of a sound of the target concerned by the user cannot be continuously provided for the user due to movement of the target.

According to a third aspect, an electronic device is provided. The electronic device includes: a detection unit, configured to detect a first operation and a second operation of a user; a display unit, configured to display, in response to the first operation, a viewfinder frame corresponding to image shooting, where the viewfinder frame includes a plurality of target shot objects, and the plurality of target shot objects include a first target shot object and a second target shot object; a video recording unit, configured to shoot, in response to the second operation of selecting the first target shot object by the user, a video corresponding to the viewfinder frame; and an audio recording unit, configured to obtain a corresponding audio when the video recording unit shoots the video corresponding to the viewfinder frame. At a first moment at which the video is shot, an intensity of a sound corresponding to the first target shot object is D1, and an intensity of a sound corresponding to the second target shot object is D2. The audio is played when the shot video is played. When the audio is played to a moment corresponding to the first moment, a sound intensity of the sound corresponding to the first target shot object is D11, and a sound intensity of the sound corresponding to the second target shot object is D11, where a ratio of D11 to D1 is greater than a ratio of D21 to D2.

In a possible example, the plurality of target shot objects further include a third target shot object. At the first moment at which the video is shot, an intensity of a sound corresponding to the third target shot object is D3. When the audio is played to the moment corresponding to the first moment, a sound intensity of the sound corresponding to the third target shot object is D31, where the ratio of D11 to D1 is greater than a ratio of D31 to D3. Optionally, the ratio of D21 to D2 is equal to the ratio of D31 to D3.

In the solution provided in the third aspect, when the user has a video recording requirement, the electronic device may identify a directional sound pickup target of the user based on an operation of conveniently selecting a target shot object in the viewfinder frame by the user, so that during video recording, a sound signal from a target concerned by the user is picked up in a targeted manner, and a sound signal from another target is weakened. According to the directional sound pickup method provided in this application, more user-friendly sound pickup experience can be provided for the user.

In a possible implementation, D11 and D21 are respectively the intensity of the sound of the first target shot object and the intensity of the sound of the second target shot object that are obtained by the electronic device. In other words, the electronic device may support using an intensity of a sound of each target shot object picked up by the electronic device as an intensity of a sound of each target shot object during video playing.

In a possible implementation, D21 is 0. In the directional sound pickup solution provided in this application, when performing video recording, the electronic device may pick up, in a targeted manner, only the sound signal from the target concerned by the user, and does not pick up the sound signal from the another target, to provide more user-friendly sound pickup experience for the user.

In a possible implementation, D21 is greater than 0. When performing video recording, the electronic device may enhance, in a targeted manner, the sound signal from the target concerned by the user, and/or weaken the sound signal from the another target, to provide more user-friendly sound pickup experience for the user.

In a possible implementation, the shot video includes an image of the first target shot object and an image of the second target shot object.

In a possible implementation, the detection unit is further configured to detect an operation of selecting, by the user, the first target shot object and the second target shot object on a video playing interface of the video; and the audio playing unit is further configured to play an audio of the first target shot object and an audio of the second target shot object in response to the operation of selecting, by the user, the first target shot object and the second target shot object on the video playing interface of the video. In the directional sound pickup solution provided in this application, when the shot video is played back, the user may select audios of specific targets to be played. This solution can provide more diversified audio playing experience for the user.

In a possible implementation, the detection unit is further configured to detect an operation of selecting a directional sound pickup mode by the user.

In a possible implementation, the first target shot object is a target shot object on which the electronic device automatically focuses in the viewfinder frame. It may be understood that, the target shot object on which the electronic device automatically focuses is usually a target with high user attention in the viewfinder frame. Based on this, in the directional sound pickup solution provided in this application, directional sound pickup may be performed based on the target shot object on which the electronic device automatically focuses, to improve automation and intelligence of directional sound pickup.

In a possible implementation, the viewfinder frame includes a first region and a second region, the first target shot object is located in the first region, the second target shot object is located in the second region, and the second operation is an operation of selecting the first region by the user. The directional sound pickup solution provided in this application may support the user in determining the directional sound pickup target by selecting a region in the viewfinder frame, to improve diversity of execution manners of the solution. For example, the second operation of selecting the first target shot object by the user is an operation of selecting, by the user, a region (for example, the first region) in which the first target shot object is located.

For example, the first region may include one or more target shot objects.

In a possible implementation, the display unit is further configured to: display a plurality of sound pickup partition options, and display a first region mark and a second region mark in the viewfinder frame in response to an operation of selecting a first sound pickup partition option in the plurality of sound pickup partition options by the user, where the second operation is an operation of tapping, by the user, a position corresponding to the first region mark. The directional sound pickup solution provided in this application may support a plurality of sound pickup partition division manners, so that the user can specify the directional sound pickup target based on an actual requirement by selecting a pickup partition in the plurality of division manners.

In a possible implementation, the plurality of sound pickup partition options include one or more of the following: a two-partition option, a four-partition option, a nine-partition option, an intelligent partition option, and an irregular partition option. The directional sound pickup solution provided in this application may support a plurality of sound pickup partition division manners, so that the user can specify the directional sound pickup target based on an actual requirement by selecting a pickup partition in the plurality of division manners.

In a possible implementation, the electronic device further includes a processing unit, configured to determine the intelligent partition option based on a position of a target shot object in the viewfinder frame. The directional sound pickup solution provided in this application may support the electronic device in determining a sound pickup partition division manner based on the position of the target shot object in the viewfinder frame, to increase automation and intelligence of sound pickup partition division.

In a possible implementation, in a process of shooting the video, a position of the first target shot object changes; at a second moment at which the video is shot, an intensity of the sound corresponding to the first target shot object is D1', an intensity of the sound corresponding to the second target shot object is D2', and the second moment is after a moment at which the position of the first target shot object changes; and the audio is played when the shot video is played, where when the audio is played to a moment corresponding to the second moment, a sound intensity of the sound corresponding to the first target shot object is D11', and a sound intensity of the sound corresponding to the second target shot object is D11', where a ratio of D11' to D1' is greater than a ratio of D21' to D2'. The directional sound pickup solution provided in this application supports tracking audio pickup on the target concerned by the user (for example, a target selected by the user), to avoid a problem that directional pickup of a sound of the target concerned by the user cannot be continuously provided for the user due to movement of the target.

Optionally, the ratio of D11' to D1' is equal to the ratio of D11 to D1. To be specific, when a position of the target concerned by the user (for example, the target selected by the user) changes, the electronic device may keep an unchanged enhancement ratio to continuously pick up the sound signal of the target concerned by the user.

In a possible implementation, the video recording unit includes a first camera, and that the video recording unit shoots the video corresponding to the viewfinder frame includes: The video recording unit shoots, by using the first camera, a single channel of video corresponding to the viewfinder frame. The directional sound pickup solution provided in this application may support a scenario in which a single channel of video is shot, for example, may support a scenario in which a single channel of video is shot by using one camera.

In a possible implementation, the video recording unit includes a first camera, and that the video recording unit shoots the video corresponding to the viewfinder frame includes: The video recording unit shoots, by using the first camera, a plurality of channels of videos corresponding to the viewfinder frame, where zoom ratios of the plurality of channels of videos are different. The directional sound pickup solution provided in this application may support a scenario in which a plurality of channels of videos are shot, for example, may support a scenario in which a plurality of channels of videos with different zoom ratios are shot by using one camera.

In a possible implementation, the video recording unit includes a first camera and a second camera, and that the video recording unit shoots the video corresponding to the viewfinder frame includes: The video recording unit shoots, by using the first camera, a first channel of video corresponding to the viewfinder frame, and shoots, by using the second camera, a second channel of video corresponding to the viewfinder frame. The directional sound pickup solution provided in this application may support a scenario in which a plurality of channels of videos are shot, for example, may support a scenario in which one channel of video is shot by using two cameras separately.

In a possible implementation, zoom ratios of the first channel of video and the second channel of video are different. The directional sound pickup solution provided in this application may support a scenario in which one channel of video is shot by using two cameras separately, where zoom ratios of two channels of videos obtained through shooting are different.

In a possible implementation, the viewfinder frame is located on an image shooting preview interface in an image shooting scenario; or the viewfinder frame is located on an image shooting interface in a video call scenario. The directional sound pickup solution provided in this application is applicable to the image shooting scenario, or is applicable to the video call scenario.

According to a fourth aspect, an electronic device is provided. The electronic device includes: a camera, configured to collect video data (for example, including video data of a first target shot object); a microphone, configured to collect audio data (for example, including audio data of the first target shot object); a display, configured to display an interface (for example, including an interface of a viewfinder frame); a speaker, configured to play an audio (for example, including an audio of the first target shot object); a memory, configured to store computer program instructions; and a processor, configured to execute the computer program instructions, to support the electronic device in implementing the method in any one of the possible implementations of the first aspect or the second aspect.

According to a fifth aspect, a computer-readable storage medium is provided. The computer-readable storage medium stores computer program instructions. When the computer program instructions are executed by a processor, the method in any one of the possible implementations of the first aspect or the second aspect is implemented.

According to a sixth aspect, a computer program product including instructions is provided, and when the computer program product runs on a computer, the computer is enabled to implement the method in any one of the possible implementations of the first aspect or the second aspect.

According to a seventh aspect, a chip system is provided. The chip system includes a processing circuit and a storage medium. The storage medium stores computer program instructions, and when the computer program instructions are executed by the processor, the method in any one of the possible implementations of the first aspect or the second aspect is implemented. The chip system may include a chip, or may include a chip and another discrete component.

### BRIEF DESCRIPTION OF DRAWINGS

FIG. 1 is a diagram of a principle of conventional omnidirectional sound pickup;
FIG. 2A is a diagram of a process of a solution in which directional sound pickup is implemented through zooming according to an embodiment of this application;
FIG. 2B is a diagram of a principle of directional sound pickup according to an embodiment of this application;
FIG. 2C is a diagram of an effect in which directional sound pickup is implemented through zooming according to an embodiment of this application;
FIG. 3A and FIG. 3B are example diagrams of two audio/video recording scenarios according to an embodiment of this application;
FIG. 4 is an example diagram of another audio/video recording scenario according to an embodiment of this application;
FIG. 5A is a diagram of a hardware structure of an electronic device according to an embodiment of this application;
FIG. 5B is a diagram of an audio beam according to an embodiment of this application;
FIG. 5C is a diagram of another audio beam according to an embodiment of this application;
FIG. 5D is a diagram of a layout of microphones according to an embodiment of this application;
FIG. 5E is a diagram of another layout of microphones according to an embodiment of this application;
FIG. 6 is a block diagram of a software structure of an electronic device according to an embodiment of this application;
FIG. 7A is a flowchart 1 of a directional sound pickup method according to an embodiment of this application;
FIG. 7B is a flowchart 2 of a directional sound pickup method according to an embodiment of this application;
FIG. 8A(a) to FIG. 8A(c) are an example diagram 1 of a process of displaying a video recording preview interface according to an embodiment of this application;
FIG. 8B(a) and FIG. 8B(b) are an example diagram 2 of a process of displaying a video recording preview interface according to an embodiment of this application;
FIG. 9A(a) to FIG. 9A(c) are an example diagram 3 of a process of displaying a video recording preview interface according to an embodiment of this application;
FIG. 9B(a) and FIG. 9B(b) are an example diagram 4 of a process of displaying a video recording preview interface according to an embodiment of this application;
FIG. 10A(a) and FIG. 10A(b) are an example diagram 1 of a user interface in a directional sound pickup mode according to an embodiment of this application;
FIG. 10B(a) and FIG. 10B(b) are an example diagram 2 of a user interface in a directional sound pickup mode according to an embodiment of this application;
FIG. 11(a) and FIG. 11(b) are an example diagram 3 of a user interface in a directional sound pickup mode according to an embodiment of this application;
FIG. 12(a) and FIG. 12(b) are an example diagram 1 of a display interface of a sound pickup partition division manner according to an embodiment of this application;
FIG. 13(a) and FIG. 13(b) are an example diagram 2 of a display interface of a sound pickup partition division manner according to an embodiment of this application;
FIG. 14(a) and FIG. 14(b) are an example diagram 3 of a display interface of a sound pickup partition division manner according to an embodiment of this application;
FIG. 15(a) and FIG. 15(b) are an example diagram 4 of a display interface of a sound pickup partition division manner according to an embodiment of this application;
FIG. 16(a) and FIG. 16(b) are an example diagram 5 of a display interface of a sound pickup partition division manner according to an embodiment of this application;
FIG. 17(a) and FIG. 17(b) are an example diagram 6 of a display interface of a sound pickup partition division manner according to an embodiment of this application;
FIG. 18(a) and FIG. 18(b) are an example diagram 7 of a display interface of a sound pickup partition division manner according to an embodiment of this application;
FIG. 19 is a flowchart 3 of a directional sound pickup method according to an embodiment of this application;
FIG. 20(a) and FIG. 20(b) are an example diagram 1 of a user interface of starting a video recording process according to an embodiment of this application;
FIG. 21(a) and FIG. 21(b) are an example diagram of a user interface of pausing a video recording process according to an embodiment of this application;
FIG. 22(a) and FIG. 22(b) are an example diagram 2 of a user interface of starting a video recording process according to an embodiment of this application;
FIG. 23(a) and FIG. 23(b) are an example diagram 3 of a user interface of starting a video recording process according to an embodiment of this application;
FIG. 24(a) and FIG. 24(b) are an example diagram 4 of a user interface of starting a video recording process according to an embodiment of this application;
FIG. 25 is a flowchart 4 of a directional sound pickup method according to an embodiment of this application; and
FIG. 26 is a block diagram of an electronic device according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

To provide directional sound pickup based on an actual requirement of a user, in a possible implementation, an electronic device may amplify, based on a zooming operation (for example, an audio focal length zoom-in operation) performed by the user on a specific target or a specific region in a viewfinder frame of a camera, a sound source from a direction of the specific target in a preset proportion.

In an example, the viewfinder frame may be located on an image shooting preview interface. For example, after detecting an operation of enabling an image shooting function by the user, the electronic device may start a camera application and display the image shooting preview interface. For example, the image shooting preview interface may include the viewfinder frame, an album icon, an image shooting control, a rotation control, and the like. The operation of enabling the image shooting function by the user is, for example, an operation of tapping a camera icon by the user or an operation of tapping the image shooting control by the user in an application.

The viewfinder frame is configured to: obtain a shot preview image, and display the preview image in real time. The album icon is used to quickly enter an album. After detecting that the user taps the album icon, the electronic device may display a shot photo, a shot video, or the like on a touchscreen. The image shooting control is configured to perform image shooting or video recording. After the electronic device detects that the user taps the image shooting control, the electronic device performs an image shooting operation, and saves a shot photo. Alternatively, when the electronic device is in a video mode, after the user taps the image shooting control, the electronic device performs a video recording operation, and saves a recorded video. A camera switching control is used to control switching between a front-facing camera and a rear-facing camera.

The image shooting preview interface may further include a function control used to set a shooting mode, for example, an aperture shooting mode, a night shooting mode, a portrait shooting mode, a photo mode, a video mode, a professional mode, or more modes. For example, more modes may further include a slow-mo mode, a panoramic mode, a black-and-white art mode, a dual-view video mode, a filter mode, a high-dynamic range image (high-dynamic range, HDR) mode, a multi-channel video mode, and the like.

In another example, the viewfinder frame may be located on a video recording interface. For example, the electronic device may display the video recording interface after detecting an operation of tapping, by the user, a button for starting video recording. For example, the video recording interface may include a control for pausing video recording, a rotation control, a front-facing camera and rear-facing camera switching control, and the like.

It should be noted that, in embodiments of this application, when the electronic device performs the image shooting operation or the video recording operation, an actual shooting range of the camera may be as large as an angle of view shown in the image shooting preview interface, or may be larger than an angle of view shown in the image shooting preview interface. This is not limited in this application.

In an example, an electronic device configured with a plurality of sound pickup microphones may adjust an audio recording focus (for example, a sound pickup direction) in real time based on an audio zooming operation performed by the user on a specific target or a specific region in the viewfinder frame of the camera. For example, the electronic device may enhance (for example, increase by a specific multiple) an intensity of a sound in a direction in which the specific target is located, and/or weaken (for example, decrease by a specific multiple) an intensity of a sound in another direction.

The zooming operation on a specific target or a specific region is an operation of changing an audio focal length of the camera by using the specific target or the specific region as a preview focus. For example, the audio focal length zoom-in operation performed on a specific target or a specific region is a continuous operation from simultaneously touching, by a thumb and an index finger, a display region corresponding to the specific target or the specific region to separately sliding in opposite directions.

For example, for a solution in which directional sound pickup is implemented through zooming, refer to FIG. 2A. As shown in FIG. 2A, to-be-processed audio data separately passes through a timbre correction module, a stereo/mono beamforming module, an ambient noise control module, a gain control module, and the like. The timbre correction module may perform timbre correction processing, to correct a frequency response change of a sound wave generated from a microphone to analog/digital conversion, for example, factors such as uneven frequency response of a microphone body, a resonance effect of a microphone pipe, and a filter circuit. The stereo/mono beamforming module is configured to form a stereo beam or a mono beam, to retain an audio signal (also referred to as a sound signal) within a coverage range of the stereo beam or the mono beam. After the zooming operation, a sound within a focus range needs to be picked up. Compared with that in an omnidirectional sound pickup solution, a sound pickup range is smaller. Therefore, after the zooming operation, the stereo beam or the mono beam may be used. The gain control module may perform gain control processing, and is configured to adjust recording volume to appropriate volume, so that a low-volume signal obtained through sound pickup can be clearly heard by the user, and a high-volume signal obtained through sound pickup does not have clipping distortion.

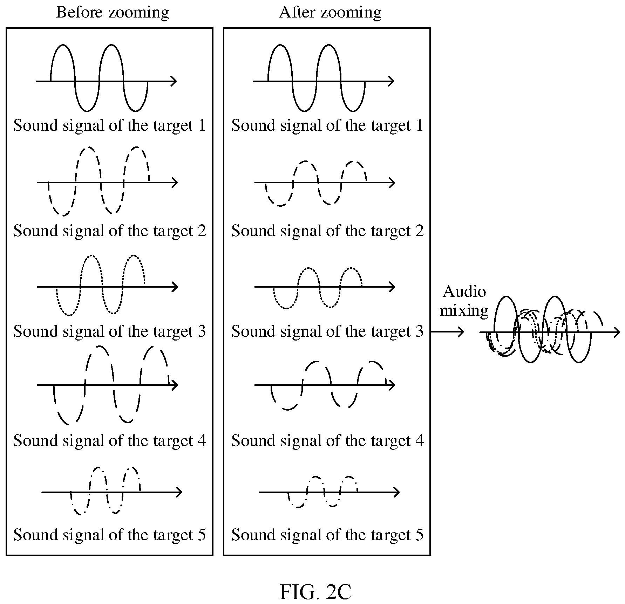

In some embodiments, the plurality of microphones may include a directional microphone (a microphone that may pick up a sound in a specific direction) and/or an omnidirectional microphone (a microphone that may pick up sounds in a plurality of directions or even all directions). Working statuses of the plurality of microphones are configured, so that sound pickup in different directions may be implemented based on different shot objects or image shooting scenarios. For example, FIG. 2B is a diagram of a principle of directional sound pickup according to some embodiments of this application. As shown in FIG. 2B, in some embodiments, a microphone A, a microphone B, and a microphone C are all directional microphones. The microphone A may pick up a sound signal in a direction in which a target 1 is located, the microphone B may pick up sound signals in directions in which a target 2 and a target 3 are located, and the microphone C may pick up sound signals in directions in which a target 4 and a target 5 are located. In response to an audio focal length zoom-in operation (amplifying a sound of the target 1) performed by the user on the target 1 in the viewfinder frame of the camera, the electronic device may enhance an intensity of a sound picked up by the microphone A (namely, an intensity of the sound of the target 1, where the intensity of the sound may be a sound pressure level), and/or weaken intensities of sounds picked up by the microphone B and the microphone C (for example, intensities of sounds of the target 2, the target 3, the target 4, and the target 5). As shown in FIG. 2C, after the intensity of the sound of the target 1 is enhanced, and/or the intensities of the sounds of the target 2, the target 3, the target 4, and the target 5 are weakened, in a sound mixing audio of the target 1, the target 2, the target 3, the target 4, and the target 5 that is output by the electronic device to the user, the sound of the target 1 may be more prominently noticed by the user.

For another example, it is assumed that the microphone A, the microphone B, and the microphone C shown in FIG. 2B are omnidirectional microphones. In response to the audio focal length zoom-in operation performed by the user on the target 1 in the viewfinder frame of the camera, the electronic device may omnidirectionally pick up all sound signals in an environment by using the microphone A, the microphone B, and the microphone C, and enhance the intensity of the sound of the target 1 and/or weaken the intensities of the sounds of the target 2, the target 3, the target 4, and the target 5 in a subsequent sound signal processing process. A sound intensity difference between the target 1 and each of the target 2, the target 3, the target 4, and the target 5 is greater than a preset threshold (for example, 10 db).

In some embodiments, in a real scenario, intensities of sounds of the target 1, the target 2, the target 3, the target 4, and the target 5 is D1, D2, D3, D4, and D5 respectively, where D1, D2, D3, D4, and D5 may be intensities of sounds emitted by the target 1, the target 2, the target 3, the target 4, and the target 5, or D1, D2, D3, D4, and D5 may be intensities of sounds sensed at an electronic device like a mobile phone when sounds of the target 1, the target 2, the target 3, the target 4, and the target 5 are propagated to the electronic device. During recording, if the electronic device amplifies the sound of the target 1, when a recorded audio or video (including playing of a video or an audio saved after image shooting, or including a sound heard by the other party during a video call or a voice call) is played, sound intensities of sound waves corresponding to the target 1, the target 2, the target 3, the target 4, and the target 5 are D11, D21, D31, D41, and D51 respectively. In this case, D11/D1 (aratio of D11 to D1) is greater than D21/D2. Similarly, D11/D1 is greater than D31/D3, D11/D1 is greater than D41/D4, and D11/D1 is greater than D41/D4. In other words, a ratio of a sound intensity of a target selected for amplification during playing to a sound intensity of the target in the real scenario is greater than that of an unselected target. For example, in the real scenario, when the intensities of the sounds of the target 1, the target 2, the target 3, the target 4, and the target 5 each are 50 decibels (db), if the sound of the target 1 is amplified during recording, when an audio or a video is played, intensities of the sounds of the target 1, the target 2, the target 3, the target 4, and the target 5 are 60 db, 40 db, 40 db, 40 db, and 40 db respectively. In a mixed audio, the sound of the target 1 may be more prominently noticed by the user. In another embodiment, a sound reduction target may be further selected.

According to the directional sound pickup method shown in FIG. 2B, the electronic device may provide personalized directional sound pickup experience for the user. However, although the directional sound pickup method shown in FIG. 2B has an effect of weakening a sound signal of a target that is located outside a direction in which a specific target is located, the sound signal of the target that is located outside the direction in which the specific target is located is still picked up, and the user is still interfered by noises. As a result, a requirement of the user for sound pickup in a specific direction cannot be met.

Generally, relative positions between different targets and the electronic device are different, and intensities of sounds emitted by the different targets are also different. Therefore, phases and intensities of sound signals collected by the electronic device from the different targets are usually different. Based on this, in some embodiments, to completely filter out the sound signal of the target that is located outside the direction in which the specific target is located, the electronic device may further perform noise reduction through filtering based on phases and/or intensities of sound signals picked up by the plurality of sound pickup microphones, to achieve an objective of directional sound pickup. For example, as shown in FIG. 2A, the electronic device may perform ambient noise suppression processing by using the ambient noise control module, to suppress a non-obvious directional ambient noise, so as to improve a signal-to-noise ratio of the sound within the focus range, make the sound within the focus range more prominent, and achieve an objective of directional sound pickup. In addition, noise reduction strength of the ambient noise control module on an ambient noise also increases with an increase of a zoom ratio. In this way, a larger zoom ratio indicates a weaker ambient noise.

However, in this method, the user needs to manually adjust (for example, zoom in) an audio focal length, and the operation is complex. In addition, zooming in the audio focal length easily causes problems such as jitter and blurring of a recorded picture. In addition, if there are a plurality of targets with a large position difference in a current viewfinder frame range of the electronic device, when an audio focal length of a specific target is zoomed in, another target may move out of the viewfinder frame range.

For the problems existing in the foregoing conventional sound pickup method, embodiments of this application provide a directional sound pickup method. The method may be used to directionally pick up a sound signal based on an actual sound pickup requirement of a user when the user has a video recording requirement. In the method, the user may control, by using a convenient operation (for example, a touch operation, a voice instruction, a gesture, or a facial expression) without affecting video recording, an electronic device to pick up, in a targeted manner, a sound signal of one or more specific targets in a plurality of sound pickup targets.

Based on a quantity of lines for obtaining recorded video pictures, a video recording mode (also referred to as a video mode) may be classified into a single-channel video mode and a multi-channel video mode (or referred to as a multi-view video mode).

In the single-channel video mode, the electronic device may record a single channel of video picture in a video recording process, that is, record a video picture of one line. Based on different shooting angles of view, the single-channel video mode may include a front-facing single-channel video mode (a mode in which a front-facing camera performs video recording) and a rear-facing single-channel video mode (a mode in which a rear-facing camera performs video recording).

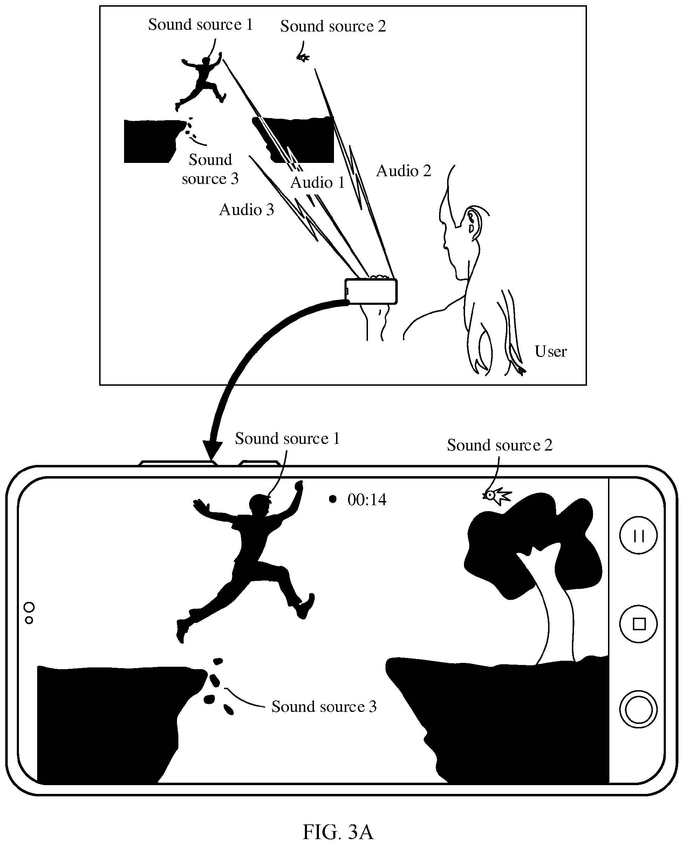

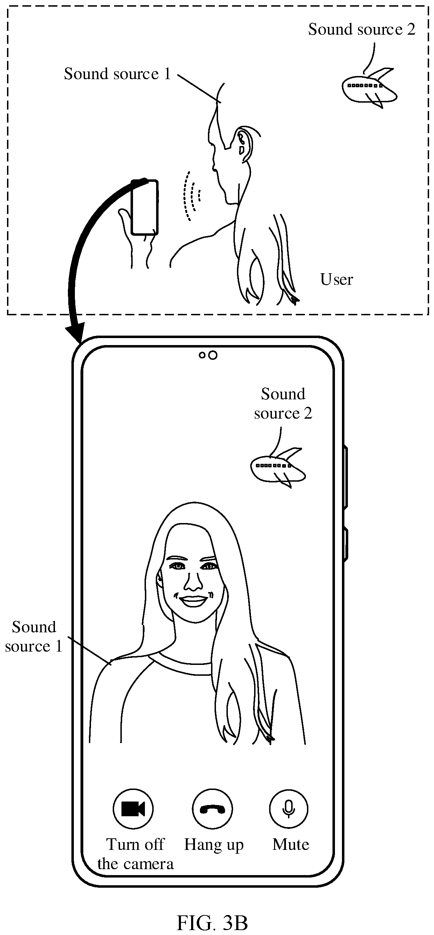

For example, a video recording scenario in the single-channel video mode is a video recording scenario shown in FIG. 3A, a video call scenario shown in FIG. 3B, or another scenario in which an audio and video recording function of a camera is invoked. This is not specifically limited in embodiments of this application.

As shown in FIG. 3A, in a process in which the user performs video recording by using the rear-facing camera of the electronic device, the electronic device records, by using the rear-facing camera, an image that is located in a rear-facing angle of view and that includes a sound source 1, a sound source 2, and a sound source 3, and a rear-facing video picture is displayed on an image shooting preview interface of the electronic device. In addition, in the video recording process, a microphone of the electronic device may record sounds of the sound source 1, the sound source 2, and the sound source 3 and a sound within a sound pickup range of the microphone. A recorded audio may be stored in a cache of the electronic device.

As shown in FIG. 3B, in a process in which the user uses the front-facing camera of the electronic device to make a video call, the electronic device records, by using the front-facing camera, an image of the user in a front-facing angle of view, and a front-facing video picture is displayed on an image shooting preview interface of the electronic device. In addition, in a video recording process, a microphone of the electronic device may record a speaking sound of the user (namely, a sound source 1) (denoted as an audio 1) and a sound within a sound pickup range of the microphone, for example, a sound of a sound source 2 (denoted as an audio 2). The audio 1 and the audio 2 may be stored in a cache of the electronic device.

In the multi-channel video mode, the electronic device may record a plurality of channels of video pictures in a video recording process, that is, record video pictures of a plurality of lines. Video pictures of different lines may correspond to different shooting angles of view. The shooting angles of view may be divided based on whether a to-be-shot object is a front-facing object or a rear-facing object, and/or a zoom ratio. For example, in embodiments of this application, the shooting angle of view may include a front-facing angle of view and a rear-facing angle of view. Based on the zoom ratio, the rear-facing angle of view may further include a wide-angle angle of view (or referred to as a rear-facing wide-angle angle of view) and a zoom angle of view (or referred to as a rear-facing zoom angle of view).

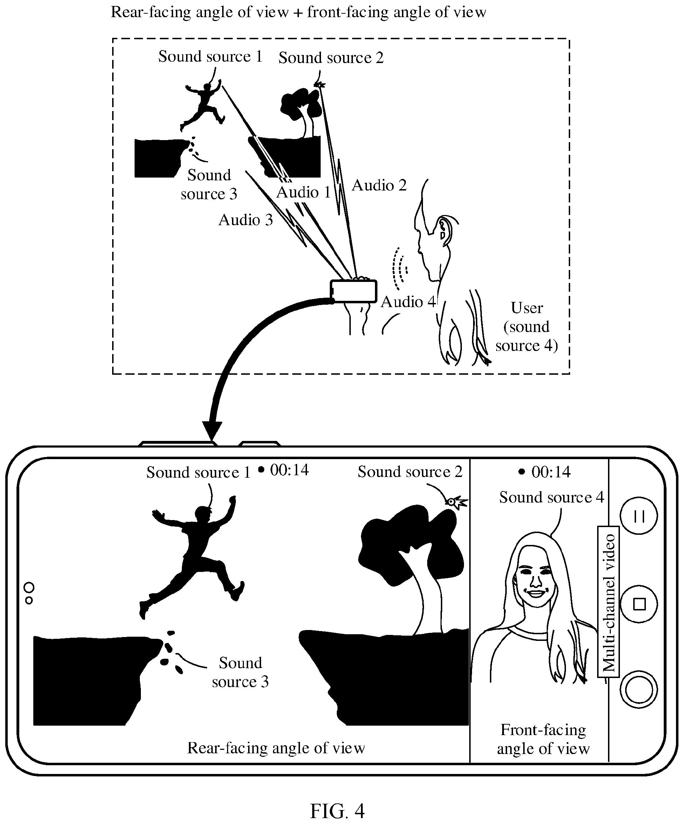

For example, a video recording scenario in the multi-channel video mode is shown in FIG. 4. As shown in FIG. 4, in a process in which the user performs video recording by using both the rear-facing camera and the front-facing camera of the electronic device, the electronic device records, by using the front-facing camera, an image that is located in a front-facing angle of view and that includes a sound source 4, and records, by using the rear-facing camera, an image that is located in a rear-facing angle of view and that includes a sound source 1, a sound source 2, and a sound source 3. A shooting angle of view in the video recording scenario shown in FIG. 4 includes the rear-facing angle of view in a left partition and the front-facing angle of view in a right partition. The image shooting preview interface of the electronic device includes a front-facing angle of view partition and a rear-facing angle of view partition, where a front-facing video picture is displayed in the front-facing angle of view partition, and a rear-facing video picture is displayed in the rear-facing angle of view partition. In addition, in the video recording process, a microphone of the electronic device may record sounds of the sound source 1, the sound source 2, the sound source 3, and the sound source 4 and a sound within a sound pickup range of the microphone. A recorded audio may be stored in a cache of the electronic device.

In an example, the multi-channel video mode may alternatively be a wide-angle angle of view and zoom angle of view combination mode, a zoom angle of view and front-facing angle of view combination mode, a rear-facing angle of view and front-facing angle of view combination mode, or a multi-channel rear-facing angle of view combination mode. This is not limited in this application.

In a possible implementation, in the multi-channel video mode, a shooting angle of view corresponding to each channel of video picture does not change in the current video recording process. Multi-channel video recording in this case may also be referred to as multi-view video recording. In another possible implementation, in the multi-channel video mode, a shooting angle of view in a video recording process may change in the current video recording process. For example, when it is detected that a talker in a shooting angle of view starts to speak, but a talker in another shooting angle of view does not speak, only the shooting angle of view may be shot to obtain a corresponding video picture. If it is detected that the talker in the another angle of view starts to speak, the angle of view corresponding to the current talker may be switched for image shooting, to obtain a new video picture.

The electronic device has a video recording function. For example, the electronic device may include but is not limited to a smartphone, a netbook, a tablet computer, a vehicle-mounted device, a wearable device (for example, a smartwatch, a smart band, or smart glasses), a camera (for example, a single-lens reflex camera or a card camera), a personal computer (personal computer, PC), a palmtop computer, a smart television, a personal digital assistant (personal digital assistant, PDA), a portable multimedia player (portable multimedia player, PMP), a projection device, a smart screen device, an augmented reality (augmented reality, AR) device/a virtual reality (virtual reality, VR) device, a mixed reality (mixed reality, MR) device, a television, a somatosensory game console in a human-computer interaction scenario, or the like. A specific function and structure of the electronic device are not limited in this application.

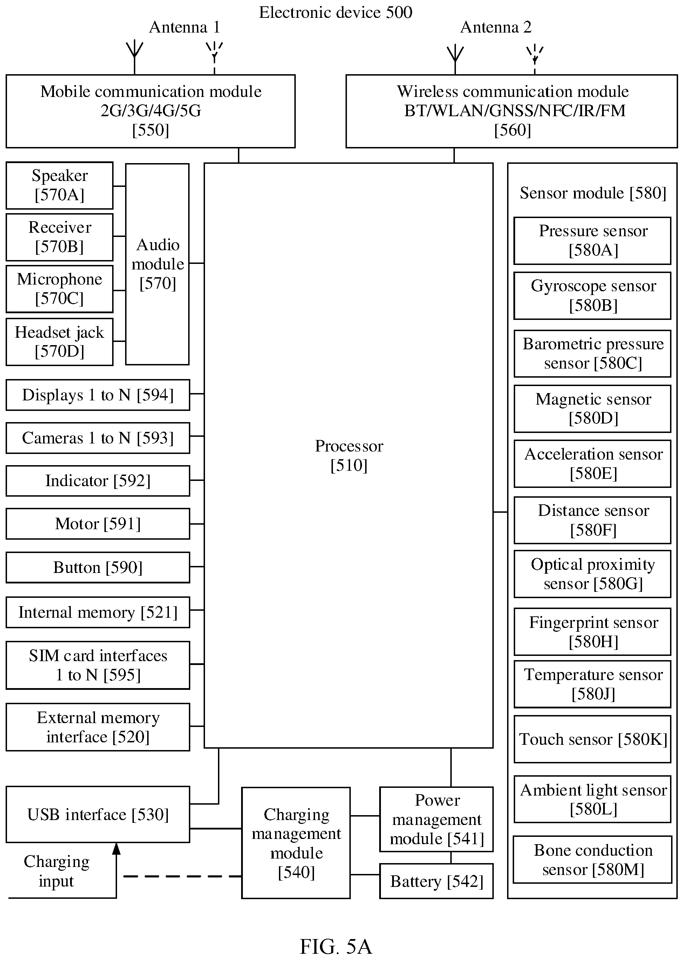

For example, FIG. 5A is a diagram of a structure of an electronic device 500 according to an embodiment of this application. The electronic device 500 may include: a processor 510, an external memory interface 520, an internal memory 521, a universal serial bus (universal serial bus, USB) interface 530, a charging management module 540, a power management module 541, a battery 542, an antenna 1, an antenna 2, a mobile communication module 550, a wireless communication module 560, an audio module 570, a speaker 570A, a receiver 570B, a microphone 570C, a headset jack 570D, a sensor module 580, a button 590, a motor 591, an indicator 592, a camera 593, a display 594, a subscriber identification module (subscriber identification module, SIM) card interface 595, and the like. The sensor module 580 may include a pressure sensor 580A, a gyroscope sensor 580B, a barometric pressure sensor 580C, a magnetic sensor 580D, an acceleration sensor 580E, a distance sensor 580F, an optical proximity sensor 580G, a fingerprint sensor 580H, a temperature sensor 580J, a touch sensor 580K, an ambient light sensor 580L, a bone conduction sensor 580M, and the like.

It may be understood that the structure shown in embodiments of this application does not constitute a specific limitation on the electronic device 500. In some other embodiments of this application, the electronic device 500 may include more or fewer components than those shown in the figure, combine some components, split some components, or have different component arrangements. The components shown in the figure may be implemented by hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), an audio processor/digital processor (the audio processor), a controller, a memory, a video codec, an audio codec, a digital signal processor (digital signal processor, DSP), a baseband processor, a neural-network processing unit (neural-network processing unit, NPU), and/or the like. Different processing units may be independent components, or may be integrated into one or more processors.

In embodiments of this application, the processor 510 may be configured to collaboratively process sensor data (for example, touch sensor data), execute a user operation instruction, and implement video shooting, directional sound pickup, and the like. For example, the processor 510 may collaboratively process the sensor data by using the DSP.

The controller may be a nerve center and a command center of the electronic device 500. The controller may generate an operation control signal based on an operation code of a user operation instruction and a time sequence signal, to complete control of instruction reading and instruction execution. For example, the memory may be further disposed in the processor 510, and is configured to store instructions and data. In some embodiments, the memory in the processor 510 is a cache. The memory may store instructions or data just used or cyclically used by the processor 510. If the processor 510 needs to use the instructions or the data again, the processor may directly invoke the instructions or the data from the memory. This avoids repeated access and reduces waiting time of the processor 510, thereby improving system efficiency.

For example, in this application, the memory stores a firmware (firmware) program, so that the controller or the processor can implement the directional sound pickup method in this application through an interface or by using a protocol.

In an example, the firmware (firmware) program stored in the memory is mainly configured to implement the following processes: determining a position of a corresponding sound source target based on an obtained operation of selecting a sound pickup partition/a target shot object by a user in a viewfinder frame; performing analog to digital (analog to digital, A/D) conversion on all analog sound signals that are in an environment and that are collected by a microphone, to obtain a digital sound signal; performing fast Fourier transform algorithm (fast Fourier transform algorithm, FFT) transformation on the digital sound signal, to obtain a sound spectrum feature; further obtaining information about a phase difference between the sound signals based on the sound spectrum feature, to preliminarily determine a position of each sound source target in the environment; determining positions of all sound source targets in the environment based on the determined position of the sound source target selected by the user and all sound signals that are in the environment and that are collected by the microphone, to estimate an orientation of the sound source target selected by the user; and performing, based on the estimated orientation of the sound source target selected by the user, noise reduction on sound signals picked up by an omnidirectional microphone, to retain a sound signal of the sound source target selected by the user, and suppress sound signals of other sound source targets in the environment.

In some embodiments, the processor 510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module interface, a universal serial bus interface, and/or the like.

The I2C interface is a two-way synchronization serial bus, and includes one serial data line (serial data line, SDA) and one serial clock line (serial clock line, SCL). In some embodiments, the processor 510 may include a plurality of groups of I2C buses. The processor 510 may be separately coupled to the touch sensor 580K, a microphone, the camera 593, and the like through different I2C bus interfaces. For example, the processor 510 may be coupled to the touch sensor 580K through the I2C interface, so that the processor 510 communicates with the touch sensor 580K through the I2C bus interface, to implement a touch function of the electronic device 500.

The I2S interface may be used for audio data transmission. In some embodiments, the processor 510 may include a plurality of groups of I2S buses. The processor 510 may be coupled to the audio module 570 through the I2S bus, to implement communication between the processor 510 and the audio module 570. In some embodiments, the audio module 570 may receive an audio signal through the I2S interface, to implement an audio recording function, for example, implement a directional sound pickup function.

The PCM interface may also be used for audio communication, and sample, quantize, and encode an analog signal. In some embodiments, the audio module 570 may be coupled to the wireless communication module 560 through a PCM bus interface. In some embodiments, the audio module 570 may alternatively transmit an audio signal to the wireless communication module 560 through the PCM interface, to implement a function of answering a call by using a Bluetooth headset; or receive an audio signal input by the wireless communication module 560 through the PCM interface, to obtain audio data collected by a wireless microphone, for example, audio data obtained after directional sound pickup.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 510 to the wireless communication module 560. For example, the processor 510 communicates with a Bluetooth module in the wireless communication module 560 through the UART interface, to implement a Bluetooth function. In some embodiments, the audio module 570 may receive, through the UART interface, an audio signal transmitted by the Bluetooth module, to implement an audio recording function by using the wireless microphone in the Bluetooth headset, for example, implement a directional sound pickup function.

The MIPI interface may be configured to connect the processor 510 to a peripheral component like the display 594 or the camera 593. The MIPI interface includes a camera serial interface (camera serial interface, CSI), a display serial interface (display serial interface, DSI), and the like. In some embodiments, the processor 510 communicates with the camera 593 through the CSI, to implement an image shooting function of the electronic device 500. The processor 510 communicates with the display 594 through the DSI interface, to implement a display function of the electronic device 500, for example, implement a display function of an image shooting preview interface, a video recording preview interface, a video recording interface, and the like.

The GPIO interface may be configured by using software. The GPIO be configured as a control signal or a data signal. In some embodiments, the GPIO interface may be configured to connect the processor 510 to the camera 593, the display 594, the wireless communication module 560, the audio module 570, the sensor module 580, or the like. The GPIO interface may alternatively be configured as an I2C interface, an I2S interface, a UART interface, an MIPI interface, or the like.

The USB interface 530 is an interface that conforms to a USB standard specification, and may be specifically a mini USB interface, a micro USB interface, a USB Type-C interface, or the like. The USB interface 530 may be configured to connect to a charger to charge the electronic device 500, may be configured to transmit data between the electronic device 500 and a peripheral device, or may be configured to connect to a headset for playing an audio through the headset, for example, playing an audio obtained after directional sound pickup. The interface may be further configured to be connected to another electronic device, for example, an AR device.

It should be understood that an interface connection relationship between modules illustrated in embodiments of this application is merely an illustrative description, and does not constitute a limitation on a structure of the electronic device 500. In some other embodiments of this application, the electronic device 500 may alternatively use an interface connection manner different from that in the foregoing embodiments, or use a combination of a plurality of interface connection manners.

The charging management module 540 is configured to receive a charging input from the charger. The power management module 541 is configured to connect the battery 542, the charging management module 540, and the processor 510. The power management module 541 receives an input of the battery 542 and/or the charging management module 540, and supplies power to the processor 510, the internal memory 521, an external memory, the display 594, the camera 593, the wireless communication module 560, and the like.

A wireless communication function of the electronic device 500 may be implemented by using the antenna 1, the antenna 2, the mobile communication module 550, the wireless communication module 560, the modem processor, the baseband processor, and the like.

The antenna 1 and the antenna 2 are configured to transmit and receive an electromagnetic wave signal. Each antenna in the electronic device 500 may be configured to cover one or more communication bands. Different antennas may be further multiplexed, to improve antenna utilization. The mobile communication module 550 may provide a wireless communication solution that includes 2G/3G/4G/5G or the like and that is applied to the electronic device 500.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. The wireless communication module 560 may provide a wireless communication solution that is applied to the electronic device 500 and that includes a wireless local area network (wireless local area network, WLAN) (for example, a wireless fidelity (wireless fidelity, Wi-Fi) network), Bluetooth (Bluetooth, BT), a BeiDou navigation satellite system (BeiDou navigation satellite system, BDS), a global navigation satellite system (global navigation satellite system, GNSS), frequency modulation (frequency modulation, FM), a near field communication (near field communication, NFC) technology, an infrared (infrared, IR) technology, or the like.

The electronic device 500 implements a display function by using the graphics processing unit (graphics processing unit, GPU), the display 594, the application processor, and the like. The GPU is a microprocessor for image processing, and is connected to the display 594 and the application processor. The GPU is configured to perform data and geometric computation for graphic rendering. The processor 510 may include one or more GPUs that execute program instructions to generate or change display information.

The display 594 is configured to display an image, a video, or the like. The display 594 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a quantum dot light emitting diode (quantum dot light emitting diode, QLED), or the like. In some embodiments, the electronic device 500 may include one or more displays 594.

In embodiments of this application, the display 594 may be configured to display an interface including a camera icon, an image shooting interface including an operation function option like a video shooting button, a video framed picture, and the like.

The electronic device 500 may implement an image shooting function by using the image signal processor (image signal processor, ISP), the camera 593, the video codec, the GPU, the display 594, the application processor, and the like. In this application, the camera 593 may include a front-facing camera and a rear-facing camera of the electronic device 500, and may be an optical zoom lens or the like. This is not limited in this application.

In some embodiments, the ISP may be disposed in the camera 593. This is not limited in this application.

The camera 593 is configured to capture a static image or a video. An optical image of an object is generated through the lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like red green blue (red green blue, RGB) or YUV.

In embodiments of this application, the electronic device 500 may include one or more cameras 593, for example, at least one front-facing camera and a rear-facing camera, a plurality of front-facing cameras, or a plurality of rear-facing cameras.

The digital signal processor is configured to process a digital signal, and may process another digital signal in addition to the digital image signal. For example, when the electronic device 500 selects a frequency, the digital signal processor is configured to perform Fourier transformation on frequency energy.

The video codec is configured to compress or decompress a digital video. The electronic device 500 may support one or more video codecs. In this way, the electronic device 500 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 500, such as image recognition, facial recognition, speech recognition, and text understanding.

The external memory interface 520 may be configured to connect to an external storage card, for example, a micro SD card, to extend a storage capability of the electronic device 500. The external storage card communicates with the processor 510 through the external memory interface 520, to implement a data storage function. For example, files such as audios or videos are stored in the external storage card.

The internal memory 521 may be configured to store executable program code of a computer program. For example, the computer program may include an operating system program and an application program. The operating system may include but is not limited to operating systems such as Symbian^{®} (Symbian^{®}), Android^{®} (Android^{®}), Microsoft^{®} Windows^{®}, Apple iOS^{®}, Blackberry^{®} (Blackberry^{®}), and Harmony^{®} (Harmony^{®}) OS. The executable program code includes instructions. The processor 510 runs the instructions stored in the internal memory 521, to perform various functional applications of the electronic device 500 and data processing. The internal memory 521 may include a program storage region and a data storage region. The program storage region may store an operating system, an application required by at least one function (for example, an audio playing function or an image playing function), and the like. The data storage region may store data (such as audio data, video data, and a phone book) created when the electronic device 500 is used. In addition, the internal memory 521 may include a high-speed random access memory, and may further include a nonvolatile memory, for example, at least one magnetic disk storage device, a flash memory, or a universal flash storage (universal flash storage, UFS).

The electronic device 500 may implement an audio function, for example, music playing and recording, by using the audio module 570, the speaker 570A, the receiver 570B, the microphone 570C, the headset jack 570D, the application processor, and the like.

The audio module 570 is configured to convert digital audio information into an analog signal for output, and is also configured to convert an analog audio input into a digital audio signal. The audio module 570 may be further configured to encode and decode audio signals. In some embodiments, the audio module 570 may be disposed in the processor 510, or some functional modules of the audio module 570 are disposed in the processor 510.

The speaker 570A, also referred to as a "loudspeaker", is configured to convert an audio electrical signal into a sound signal. The electronic device 500 may be used by the user to listen to an audio or answer a call in a hands-free mode over the speaker 570A.

The receiver 570B, also referred to as an "earpiece", is configured to convert an audio electrical signal into a sound signal. When a call is answered or a voice message is received through the electronic device 500, the receiver 570B may be put close to a human ear to listen to a voice.

The microphone 570C, also referred to as a "mike" or a "mic", is configured to convert a sound signal into an electrical signal. When making a call or sending a voice message, the user may generate a sound near the microphone 570C through the mouth of the user, to input a sound signal to the microphone 570C. In this application, at least two microphones 570C, for example, a local microphone or a wireless microphone, may be disposed in the electronic device 500. In some other embodiments, three, four, or more microphones 570C may alternatively be disposed in the electronic device 500, to collect a sound signal, reduce noises, and the like.

In some embodiments, the plurality of microphones 570C may include omnidirectional microphones and/or directional microphones. The omnidirectional microphone may omnidirectionally collect a sound signal in an environment. The directional microphone may identify a sound source, and collect a sound signal in a specific direction, that is, implement a directional sound pickup function.

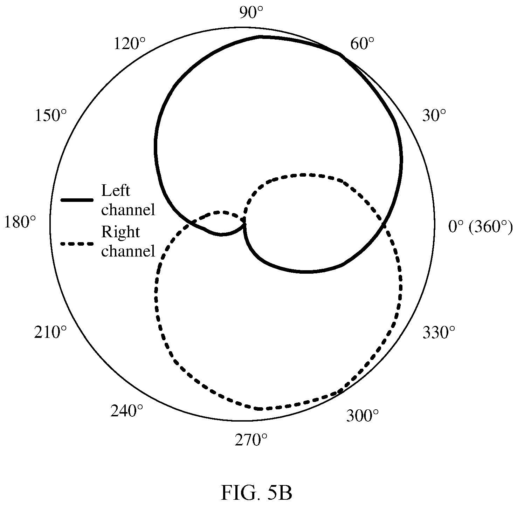

For example, the omnidirectional microphone may use a stereo beam to retain an audio signal within a large range. In addition, an included angle between a left-channel beam and a right-channel beam in the stereo beam may be controlled within a large angle range, so that a combined stereo beam can cover a large range. The included angle between the left-channel beam and the right-channel beam is an included angle between a tangent that passes through a first tangent point and a tangent that passes through a second tangent point. The first tangent point is a tangent point between the left-channel beam and a circular boundary, and the second tangent point is a tangent point between the right-channel beam and the circular boundary. For example, an included angle of the stereo beam may be controlled within 120 degrees to 180 degrees, and the stereo beam may cover a 360-degree panoramic direction. For example, for a diagram of a beam of a sound signal collected by an omnidirectional microphone, refer to FIG. 5B. A solid-line beam represents a left-channel beam, a dashed-line beam represents a right-channel beam, and a 0-degree direction is aligned with a rear-shooting direction. The rear-shooting direction is that a rear of the electronic device is perpendicular to a surface of the electronic device, and a perpendicular point is a direction of the camera. As shown in FIG. 5B, the omnidirectional microphone may omnidirectionally collect a sound signal within a 360-degree range.

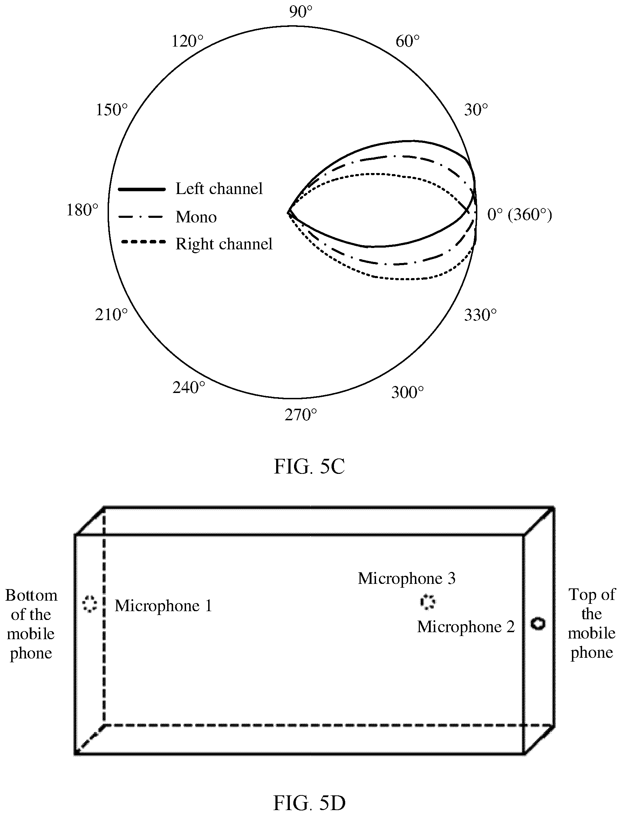

For example, the directional microphone may narrow a mono beam, or narrow an included angle of stereo beams. For example, for a diagram of a beam of a sound signal collected by a directional microphone, refer to FIG. 5C. As shown in FIG. 5C, a solid-line beam represents a left-channel beam, a dashed-line beam represents a right-channel beam, and a 0-degree direction is aligned with a rear-shooting direction. As shown in FIG. 5C, the directional microphone may directionally collect a sound signal in a direction range corresponding to 0 degrees.

In embodiments of this application, the plurality of microphones 570C may convert obtained sound signals into electrical signals and transmit the electrical signals to the processor 510. After receiving the plurality of audio signals, the audio processor in the processor 510 processes the plurality of audio signals, for example, encodes an audio of each channel by using the audio codec.

For example, the electronic device is a mobile phone. A layout of microphones 570C on the electronic device 500 may be shown in FIG. 5D. The electronic device 500 may include a microphone 1 disposed at the bottom, a microphone 2 disposed at the top, and a microphone 3 disposed on the back. A combination of the microphones 1 to 3 may separately collect sound signals in all directions around the electronic device 500.

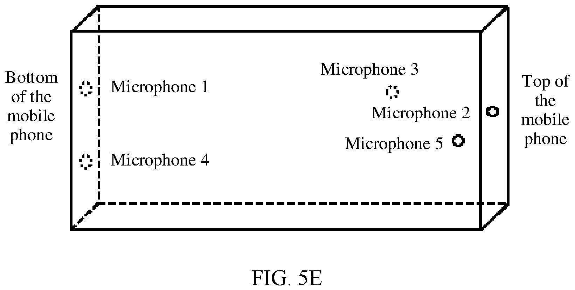

Refer to FIG. 5E. For another example, the electronic device is a mobile phone, and the electronic device 500 may further include more microphones 570C. As shown in FIG. 5E, the electronic device 500 may include a microphone 1 and a microphone 4 that are disposed at the bottom, a microphone 2 that is disposed at the top, a microphone 3 that is disposed on the back, and a microphone 5 that is disposed on the front of the screen. These microphones may separately collect sound signals in all directions around the electronic device 500. The screen is the display 594 or a touchscreen.

For another example, at least one of the plurality of microphones on the electronic device may alternatively be located at a camera (for example, a front-facing camera or a rear-facing camera). The plurality of microphones may convert the obtained sound signals into electrical signals, and transfer the electrical signals to a processor (for example, the audio processor) for subsequent processing (for example, encoding).

A video recording scenario shown in FIG. 3A is used as an example. The microphone of the electronic device may separately collect sound signals from three sound pickup targets (the sound source 1, the sound source 2, and the sound source 3 shown in FIG. 3A) in different orientations. A video recording scenario shown in FIG. 3B is used as an example. The microphone of the electronic device may separately collect sound signals from two sound pickup targets (the sound source 1 and the sound source 2 shown in FIG. 3B) in different orientations. A video recording scenario shown in FIG. 4 is used as an example. The microphone of the electronic device may separately collect sound signals from four sound pickup targets (the sound source 1, the sound source 2, the sound source 3, and the sound source 4 shown in FIG. 4) in different orientations.

It should be noted that the microphone 570C may be a built-in component of the electronic device 500, or may be an external accessory of the electronic device 500. For example, the electronic device 500 may include a microphone disposed at the bottom, a microphone disposed at the top, and an external accessory. For example, the external accessory may be a micro microphone connected (in a wired or wireless connection manner) to the electronic device 500, a headset having a microphone (for example, a wired headset or a true wireless stereo (true wireless stereo, TWS) headset), or the like.

In some other embodiments, the microphone 570C may alternatively be located in another electronic device (for example, a wireless headset, a smart speaker, a smart television, a smartwatch, or a tablet computer) that maintains a communication connection (for example, a Bluetooth connection or a wired connection) to the electronic device 500. The scenario shown in FIG. 4 is used as an example. A person corresponding to the sound source 1 may wear a wireless headset, and a communication connection is established between the wireless headset and an electronic device of the user. In a video recording process, the electronic device may obtain a sound of the sound source 1 collected by the wireless headset and sounds within a sound pickup range of the wireless headset.

The headset jack 570D is configured to connect to a wired headset. The headset jack 570D may be the USB interface 530, or may be a 3.5 mm open mobile terminal platform (open mobile terminal platform, OMTP) standard interface or a cellular telecommunications industry association of the USA (cellular telecommunications industry association of the USA, CTIA) standard interface.

The touch sensor 580K is also referred to as a "touch panel". The touch sensor 580K may be disposed on the display 594, and the touch sensor 580K and the display 594 form a touchscreen, which is also referred to as a "touch screen". The touch sensor 580K is configured to detect a touch operation performed on or near the touch sensor. The touch sensor may transfer a detected touch operation (including information such as a touch position, touch strength, a contact area, and touch duration) to the processor (for example, the DSP), to determine a touch event type. A visual output related to the touch operation may be provided on the display 594. In some other embodiments, the touch sensor 580K may alternatively be disposed on a surface of the electronic device 500 at a position different from that of the display 594.

For example, in embodiments of this application, the electronic device 500 may detect, by using the touch sensor 580K, an operation of indicating to turn on a camera by the user, an operation of switching a sound pickup mode by the user, an operation of selecting a directional sound pickup function option by the user, an operation of selecting a sound pickup partition option by the user, an operation of starting/pausing video recording by the user, an operation of indicating to play a recorded video by the user, and the like.

It may be understood that the structure shown in embodiments of this application does not constitute a specific limitation on the electronic device 500. In some other embodiments of this application, the electronic device 500 may include more or fewer components than those shown in the figure, combine some components, split some components, or have different component arrangements. The components shown in the figure may be implemented by using hardware, software, or a combination of software and hardware.

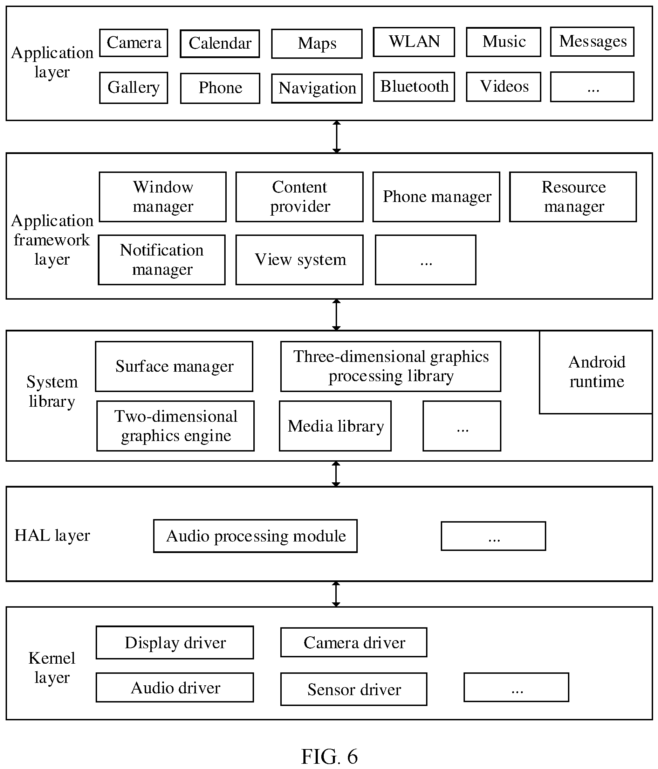

FIG. 6 is a block diagram of a software structure of the electronic device 500 according to an embodiment of this application by using an Android^{®} system as an example. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, a hardware abstraction layer (hardware abstraction layer, HAL), and a kernel layer from top to bottom. The application layer may include a series of application packages.

As shown in FIG. 6, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 6, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 500, for example, management of a call status (including answering, declining, or the like).

The resource manager provides various resources such as a localized character string, an icon, an image, a layout file, and a video file for an application.

The notification manager enables an application to display notification information in the status bar, may be configured to convey a notification message, and may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background, or may be a notification that appears on the screen in a form of a dialog window. For example, text information is displayed in the status bar, an announcement is given, the device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The HAL layer is an interface layer located between an operating system kernel and a hardware circuit, and may abstract hardware. The HAL layer includes an audio processing module. The audio processing module may be configured to: process an analog audio electrical signal obtained by the microphone, and output an audio signal. The multi-channel video mode is used as an example. The audio processing module may be configured to process, based on a shooting angle of view, an analog audio electrical signal obtained by the microphone, to generate audios corresponding to different shooting angles of view and video pictures. For example, for a wide-angle angle of view, the audio processing module may include a timbre correction module, a stereo beamforming module, a gain control module, and the like. For a zoom angle of view, the audio processing module may include a timbre correction module, a stereo/mono beamforming module, an ambient noise control module, a gain control module, and the like. For a front-facing angle of view, the audio processing module may include a timbre correction module, a stereo/mono beamforming module, a human voice enhancement module, a gain control module, and the like.

The kernel layer is a layer between a hardware layer and the foregoing software layer. The kernel layer includes at least a display driver, a camera driver, an audio driver, and a sensor driver. The hardware layer may include a camera, a display, a microphone, a processor, a memory, and the like.

In embodiments of this application, the display at the hardware layer may display a video recording preview interface, a video recording interface, and the like during video recording. For example, the electronic device may display the video recording preview interface after detecting an operation of selecting a video recording function on an image shooting preview interface by the user. For example, the video recording preview interface may include a viewfinder frame, an album icon, a video control, a rotation control, and the like. The video recording interface is an application interface of the camera application in a video recording process. For example, the electronic device may display the video recording interface when detecting an operation of tapping a video control on the video recording preview interface by the user.

The camera at the hardware layer may be configured to capture a video picture (including a single channel of video picture or a plurality of channels of video pictures). The microphone at the hardware layer may be configured to collect a sound signal, for example, perform directional sound pickup and/or omnidirectional sound pickup, and generate an analog audio electrical signal. The audio processing module at the HAL layer may be configured to process digital audio data converted from an analog audio electrical signal. During video playing, the display may display a video playing interface, and the speaker may play an audio corresponding to a shooting angle of view or a video partition concerned by the user, to improve directional sound pickup audio experience of the user.

With reference to the accompanying drawings, the following specifically describes a directional sound pickup method provided in embodiments of this application by using an example in which an electronic device is in a video recording scenario, the electronic device is a mobile phone having a hardware structure shown in FIG. 5A, and the mobile phone has a plurality of microphones.

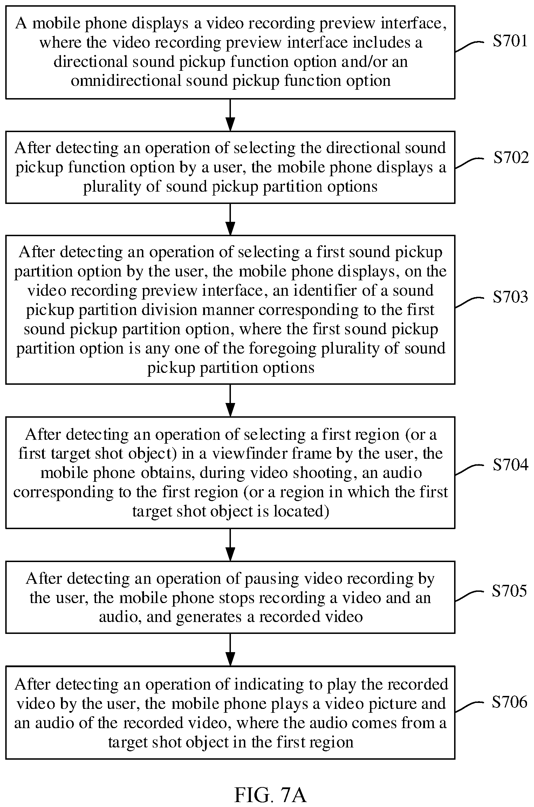

As shown in FIG. 7A, the directional sound pickup method provided in embodiments of this application may include S701 to S706.

S701: The mobile phone displays a video recording preview interface. The video recording preview interface includes a directional sound pickup function option and/or an omnidirectional sound pickup function option.

A viewfinder frame on the video recording preview interface includes a plurality of target shot objects.

In some embodiments, after detecting an operation of turning on a camera (which may also be referred to as a camera application below) by a user, the mobile phone may start the camera application, and display an image shooting preview interface. Further, the mobile phone may display the video recording preview interface after detecting an operation of selecting a video recording function by the user.

There may be a plurality of operations performed by the user to turn on the camera, including a touch operation, a voice instruction, a gesture instruction, a facial expression instruction, and the like. A specific operation form of turning on the camera by the user is not limited in this application. For example, when a screen is turned on and a home screen is displayed, or when a screen is turned off, if the mobile phone detects an operation of drawing a preset track (for example, a "CM" track) on the touchscreen by the user, the mobile phone starts the camera application and displays the image shooting preview interface. An operation manner in which the user turns on the camera depends on a specific function and setting of the mobile phone.

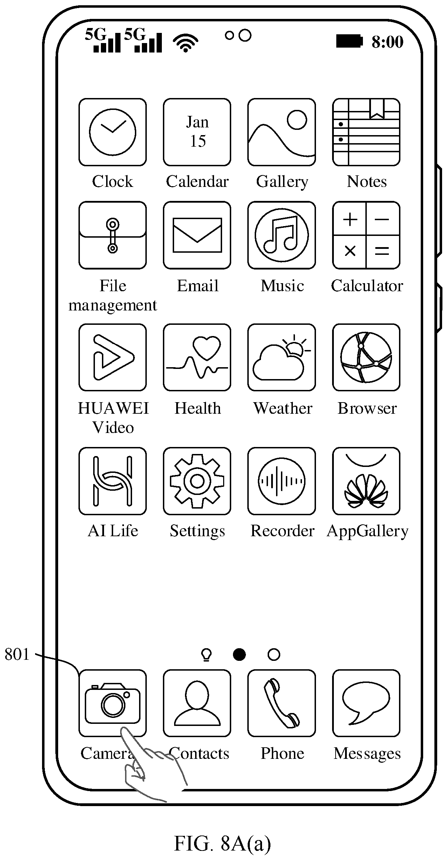

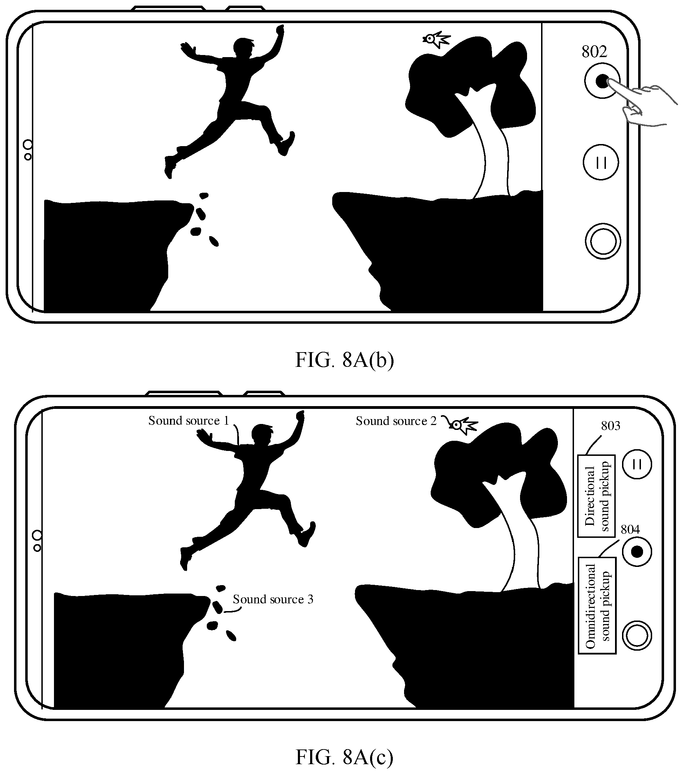

For example, after detecting an operation of tapping, by the user, a camera icon 801 shown in FIG. 8A(a), the mobile phone starts the camera application and displays an image shooting preview interface shown in FIG. 8A(b). The image shooting preview interface shown in FIG. 8A(b) is used to shoot an image. The image shooting preview interface includes a video recording function button 802. Further, after detecting an operation of tapping, by the user, the video recording function button 802 shown in FIG. 8A(b), the mobile phone displays a video recording preview interface shown in FIG. 8A(c). As shown in FIG. 8A(c), the video recording preview interface includes a directional sound pickup button (namely, a directional sound pickup function option) 803. The video recording preview interface further includes a plurality of target shot objects (including a sound source 1, a sound source 2, and a sound source 3 shown in FIG. 8A(c)).

In some other embodiments, after detecting an operation of turning on a camera (which may also be referred to as a camera application below) by a user, the mobile phone may start the camera application, and display a video recording preview interface.

In an example, after starting the camera application and displaying the video recording preview interface, the mobile phone may enter a single-channel video mode.

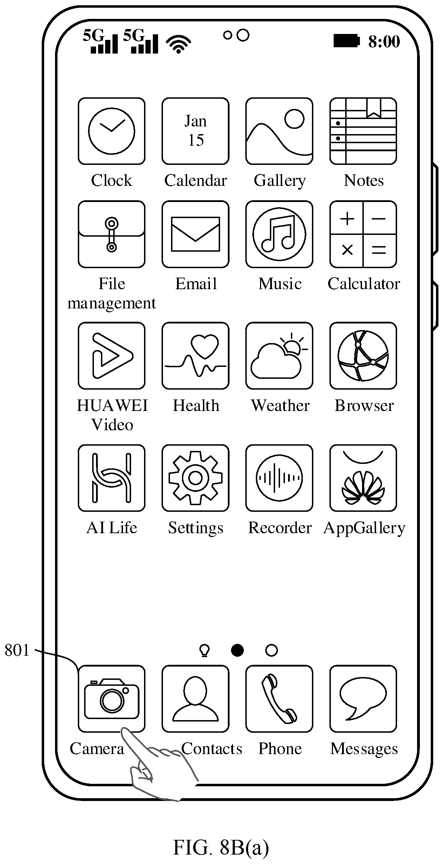

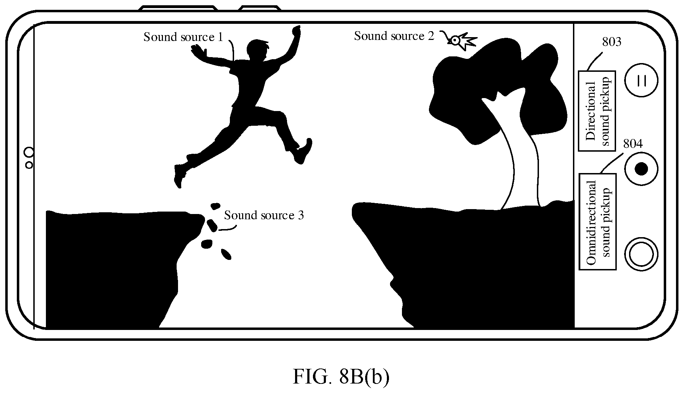

For example, after detecting an operation of tapping, by the user, a camera icon 801 shown in FIG. 8B(a), the mobile phone starts the camera application and displays a video recording preview interface shown in FIG. 8B(b). As shown in FIG. 8B(b), the video recording preview interface includes a directional sound pickup button (namely, a directional sound pickup function option) 803. The video recording preview interface further includes a plurality of target shot objects (including a sound source 1, a sound source 2, and a sound source 3 shown in FIG. 8B(b)).

In some embodiments, the video recording preview interface further includes an omnidirectional sound pickup function option, for example, an omnidirectional sound pickup button 804 on the video recording preview interface shown in FIG. 8A(b) and FIG. 8B(b).

In another example, after starting the camera application and displaying the video recording preview interface, the mobile phone may enter a multi-channel video mode. The mobile phone may enter the multi-channel video mode in a plurality of manners.

In an implementation, after starting the camera application, the mobile phone enters the single-channel video mode by default. The mobile phone enters the multi-channel video mode after detecting a preset operation of indicating to enter the multi-channel video mode by the user.

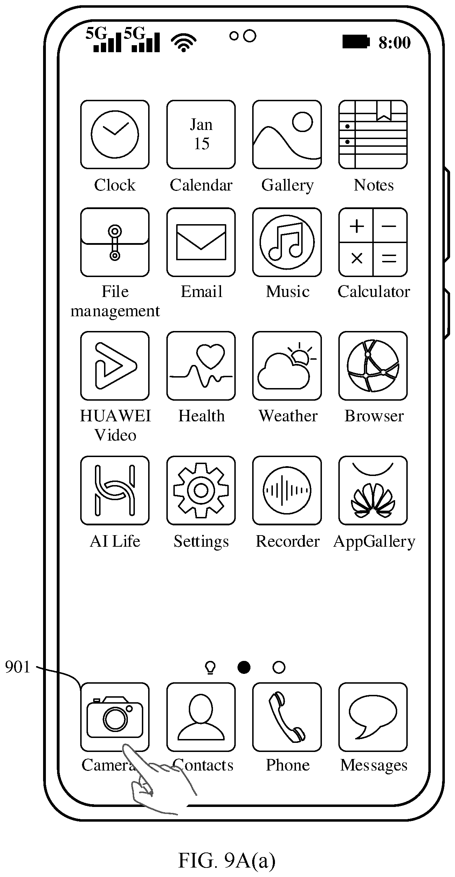

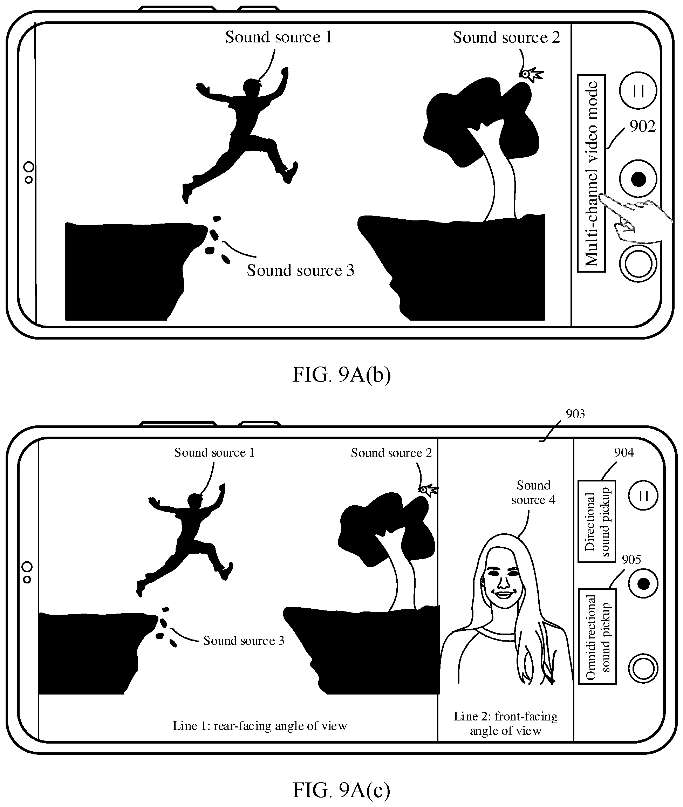

For example, as shown in FIG. 9A(a) to FIG. 9A(c), after detecting an operation of tapping, by the user, a camera icon 901 shown in FIG. 9A(a), the mobile phone starts the camera application and displays a single-channel video recording preview interface shown in FIG. 9A(b). As shown in FIG. 9A(b), the video recording preview interface includes a multi-channel video mode button 902 by default. Further, after detecting an operation of selecting the multi-channel video mode button 902 by the user, the mobile phone displays a multi-channel video recording preview interface 903 shown in FIG. 9A(c). The multi-channel video recording preview interface 903 includes a line 1 and a line 2, where the line 1 corresponds to a rear-facing camera angle of view, and the line 2 corresponds to a front-facing camera angle of view. The multi-channel video recording preview interface further includes a plurality of target shot objects (including a sound source 1, a sound source 2, a sound source 3, and a sound source 4 shown in FIG. 9A(c)). As shown in FIG. 9A(c), the multi-channel video recording preview interface 903 further includes a directional sound pickup button (namely, a directional sound pickup function option) 904.

In an implementation, after starting the camera application, the mobile phone may enter the multi-channel video mode by default.

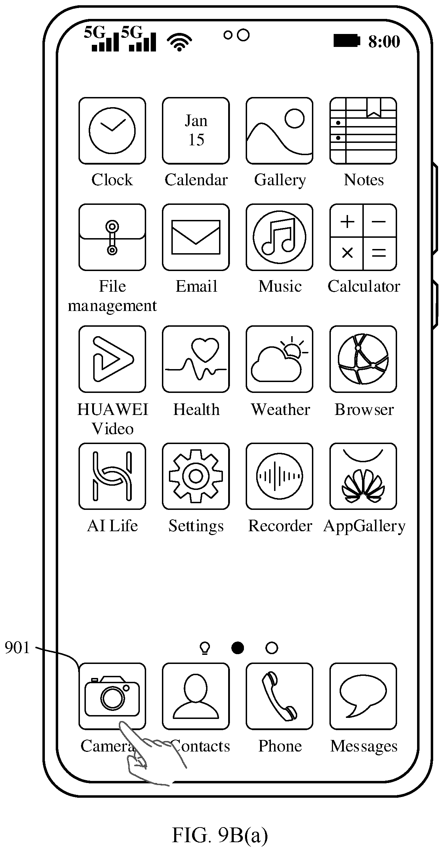

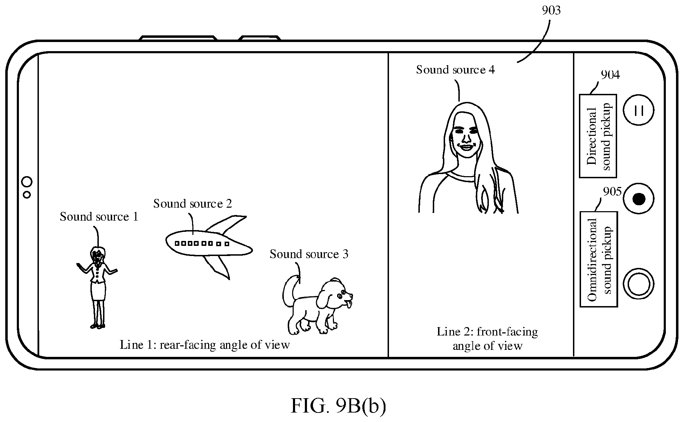

For example, as shown in FIG. 9B(a) and FIG. 9B(b), after detecting an operation of tapping, by the user, a camera icon 901 shown in FIG. 9B(a), the mobile phone starts the camera application and displays a multi-channel video recording preview interface 903 shown in FIG. 9B(b). As shown in FIG. 9B(b), the multi-channel video recording preview interface 903 includes a line 1 and a line 2, where the line 1 corresponds to a rear-facing camera angle of view, and the line 2 corresponds to a front-facing camera angle of view. The multi-channel video recording preview interface 903 further includes a plurality of target shot objects (including a sound source 1, a sound source 2, a sound source 3, and a sound source 4 shown in FIG. 9B(b)). As shown in FIG. 9B(b), the multi-channel video recording preview interface 903 further includes a directional sound pickup button (namely, a directional sound pickup function option) 904.

In some embodiments, the multi-channel video recording preview interface further includes an omnidirectional sound pickup function option, for example, an omnidirectional sound pickup button 905 on the multi-channel video recording preview interface shown in FIG. 9A(c) and FIG. 9B(b).

It should be noted that FIG. 8A(a) to FIG. 8A(c), FIG. 8B(a) and FIG. 8B(b), FIG. 9A(a) to FIG. 9A(c), and FIG. 9B(a) and FIG. 9B(b) are merely several examples of processes of displaying the video recording preview interface. This is not specifically limited in this application. For example, in some cases, after detecting a preset sliding track (for example, a "V"-shaped track) of the user on the display, the mobile phone may also directly start the camera and displays the multi-channel video recording preview interface.

In addition, the video recording preview interfaces shown in FIG. 8A(c), FIG. 8B(b), FIG. 9A(c), and FIG. 9B(b) are merely used as examples. A specific page layout of the video recording preview interface and a specific display form of the directional sound pickup function option are not limited in this application. For example, the directional sound pickup function option may alternatively be in a form of a drop-down menu, a specific icon control, or the like.

In some embodiments, a default sound pickup mode on the video recording preview interface may be an omnidirectional sound pickup mode. For example, the default sound pickup mode on the video recording preview interface is an omnidirectional sound pickup mode used by the user last time. In this case, the mobile phone may switch a sound pickup mode to a directional sound pickup mode after detecting an operation of switching the sound pickup mode by the user (for example, an operation of selecting a directional sound pickup function option). For example, the operation of switching the sound pickup mode by the user is the operation of selecting the directional sound pickup function option by the user on the video recording preview interface. Alternatively, the operation of switching the sound pickup mode by the user is, for example, an operation of double-tapping/sliding/pressing and holding a video recording button on the video recording preview interface by the user. Alternatively, the operation of switching the sound pickup mode by the user is, for example, an operation of sliding on a preset track of the user, a voice instruction, or a gesture instruction. This is not limited in this application.

In some other embodiments, a default sound pickup mode on the video recording preview interface may be a directional sound pickup mode. For example, the default sound pickup mode on the video recording preview interface is a directional sound pickup mode used by the user last time. In this case, the mobile phone may directly display a plurality of sound pickup partition options.

S702: After detecting the operation of selecting the directional sound pickup function option by the user, the mobile phone displays the plurality of sound pickup partition options.

For example, after detecting the operation of selecting the directional sound pickup function option by the user, the mobile phone displays a sound pickup partition selection box on the video recording preview interface for the user to select a sound pickup partition division manner. The sound pickup partition selection box includes a plurality of sound pickup partition options.

For example, the sound pickup partition option may include but is not limited to a two-partition option, a four-partition option, a nine-partition option, an intelligent partition option, or another irregular partition option. This is not limited in this application.

There may be a plurality of operations of selecting the directional sound pickup function option by the user.

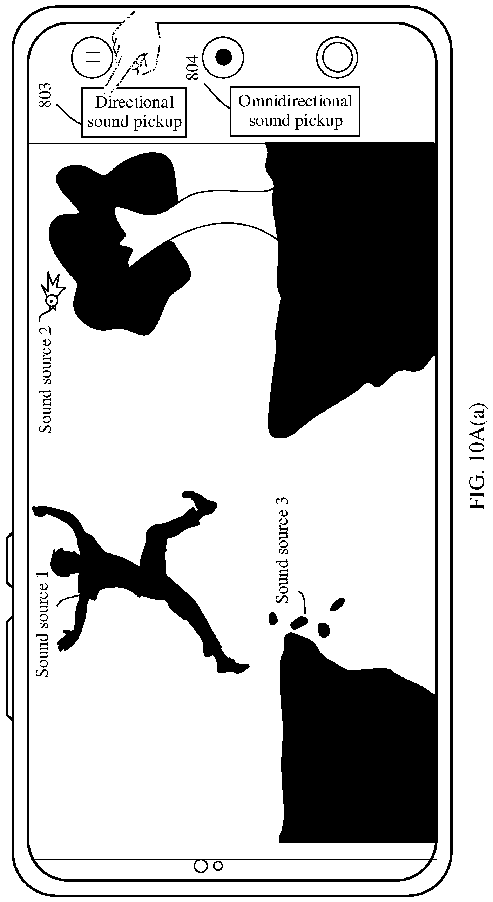

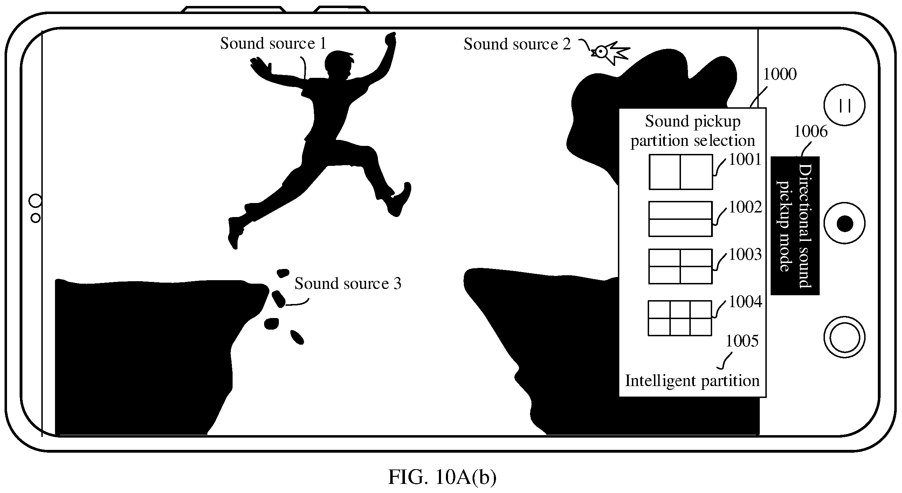

For example, after detecting an operation of tapping, by the user, a directional sound pickup button 803 shown in FIG. 10A(a), the mobile phone displays an interface shown in FIG. 10A(b). As shown in FIG. 10A(b), the interface includes a sound pickup partition selection box 1000, the sound pickup partition selection box 1000 is used by the user to select a sound pickup partition division manner, and the sound pickup partition selection box 1000 includes a plurality of sound pickup partition options (a left-right two-partition option 1001, an upper-lower two-partition option 1002, a four-partition option 1003, a six-partition option 1004, and an intelligent partition option 1005 shown in FIG. 10A(b)).

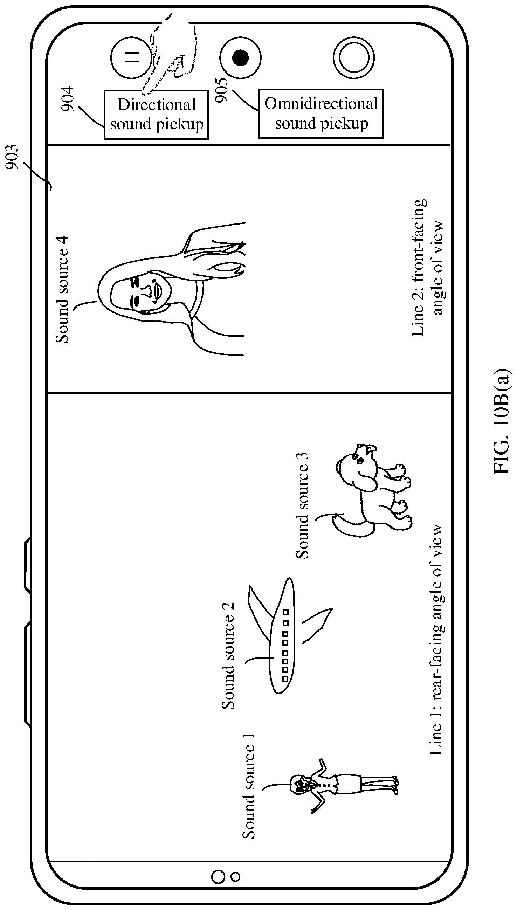

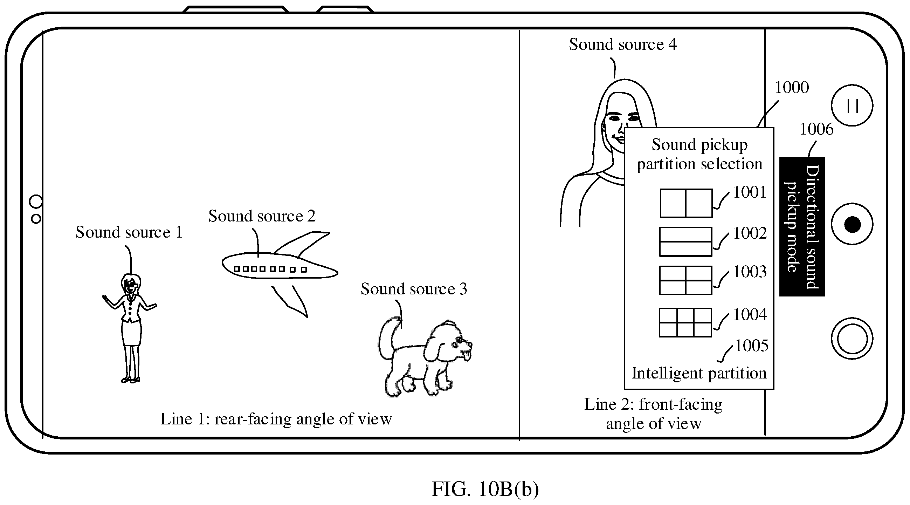

For example, after detecting an operation of tapping, by the user, a directional sound pickup button 904 shown in FIG. 10B(a), the mobile phone displays an interface shown in FIG. 10B(b). As shown in FIG. 10B(b), the interface includes a sound pickup partition selection box 1000, the sound pickup partition selection box 1000 is used by the user to select a sound pickup partition division manner, and the sound pickup partition selection box 1000 includes a plurality of sound pickup partition options (a left-right two-partition option 1001, an upper-lower two-partition option 1002, a four-partition option 1003, a six-partition option 1004, and an intelligent partition option 1005 shown in FIG. 10B(b)).

It may be understood that, after the mobile phone detects the operation of selecting the directional sound pickup function option by the user, the mobile phone enters the directional sound pickup mode.

In a possible example, after the mobile phone enters the directional sound pickup mode, an identifier related to the directional sound pickup mode may be displayed on an interface (for example, an identifier 1006 shown in FIG. 10A(b) and an identifier 1006 shown in FIG. 10B(b)), to notify the user that the current sound pickup mode is the directional sound pickup mode.

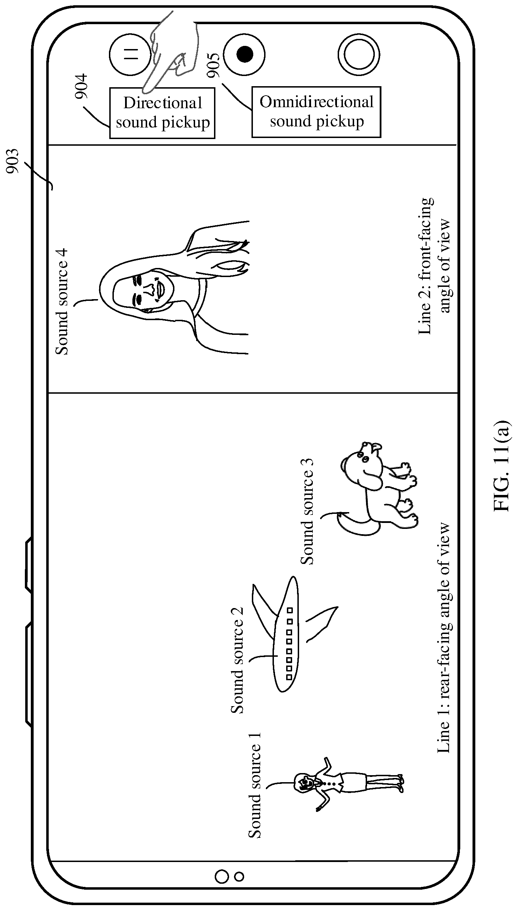

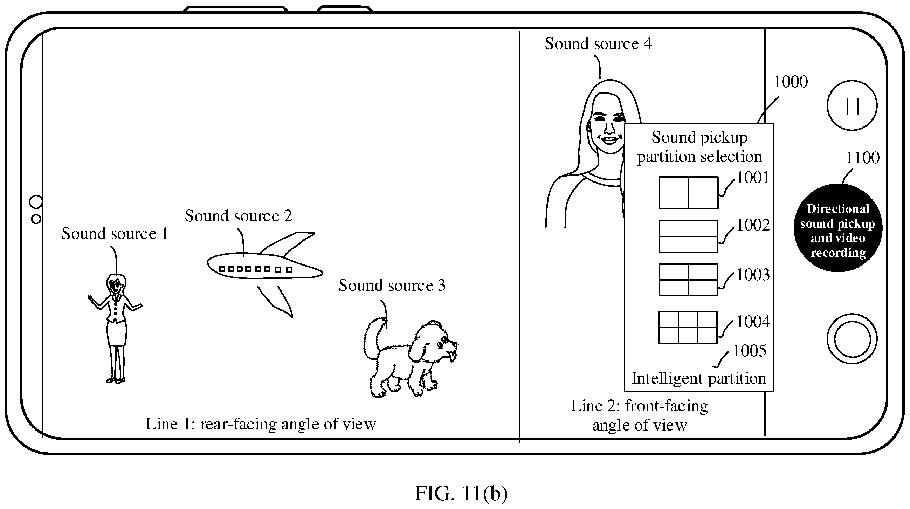

In another possible example, after the mobile phone enters the directional sound pickup mode, a button for triggering video recording shown in FIG. 11(a) may be replaced with a directional sound pickup and video recording button 1100 shown in FIG. 11 (b), to notify the user of the current sound pickup mode.

In a possible implementation, the mobile phone may display a plurality of sound pickup partition options based on a predefined sound pickup partition template. For example, the left-right two-partition option 1001, the upper-lower two-partition option 1002, the four-partition option 1003, and the six-partition option 1004 shown in FIG. 10A(b) and FIG. 10B(b) may be predefined sound pickup partition template options.

Further, in embodiments of this application, update of the predefined sound pickup partition template may be supported. For example, for a zoom angle of view, the mobile phone may update a sound pickup partition template in real time based on a zoom ratio, and further update a sound pickup partition option corresponding to the sound pickup partition template.

In another possible implementation, the mobile phone may determine and display a plurality of sound pickup partition options based on a disposing position of a microphone in the mobile phone. For example, one microphone may correspond to one or more partitions. For example, a microphone may be disposed in a position corresponding to each partition in the left-right two-partition option 1001, the upper-lower two-partition option 1002, the four-partition option 1003, and the six-partition option 1004 shown in FIG. 10A(b) and FIG. 10B(b).

In still another possible implementation, the mobile phone further has a function of supporting intelligent partitioning, as shown in the intelligent partition option 1005 shown in FIG. 10A(b) and FIG. 10B(b).

In some embodiments, after the mobile phone detects an operation of selecting an omnidirectional sound pickup function option by the user (for example, the user taps the omnidirectional sound pickup button 804 shown in FIG. 8A(c) or FIG. 8B(b), or the omnidirectional sound pickup button 905 shown in FIG. 9A(c) or FIG. 9B(b)), the mobile phone enters the omnidirectional sound pickup mode. The mobile phone in the omnidirectional sound pickup mode may perform video shooting on the target shot object in the viewfinder frame, and may collect all audios in a current environment without difference.

For example, the mobile phone in the omnidirectional sound pickup mode may invoke an omnidirectional microphone in the mobile phone, or invoke all microphones (including the omnidirectional microphone and a directional microphone) in the mobile phone, to collect all sound signals in the current environment without difference.

The mobile phone in the omnidirectional sound pickup mode may further perform A/D conversion on all sound signals that are in the current environment and that are collected by the microphone, to obtain a digital sound signal; perform FFT transformation on the digital sound signal, to obtain a sound spectrum feature; and finally obtain information about a phase difference between the sound signals based on the sound spectrum feature, to preliminarily determine a position of each sound source target in the current environment.

Optionally, in some embodiments, after detecting the operation of selecting the directional sound pickup function option by the user, the mobile phone may alternatively directly display an identifier of an intelligent partition division manner on the video recording preview interface.

S703: After detecting an operation of selecting a first sound pickup partition option by the user, the mobile phone displays, on the video recording preview interface, an identifier of a sound pickup partition division manner corresponding to the first sound pickup partition option. The first sound pickup partition option is any one of the foregoing plurality of sound pickup partition options.

The identifier of the sound pickup partition division manner corresponding to the first sound pickup partition option identifies positions of a plurality of partitions corresponding to the first sound pickup partition option in the viewfinder frame, so that the user can subsequently select a directional sound pickup region based on an actual requirement.

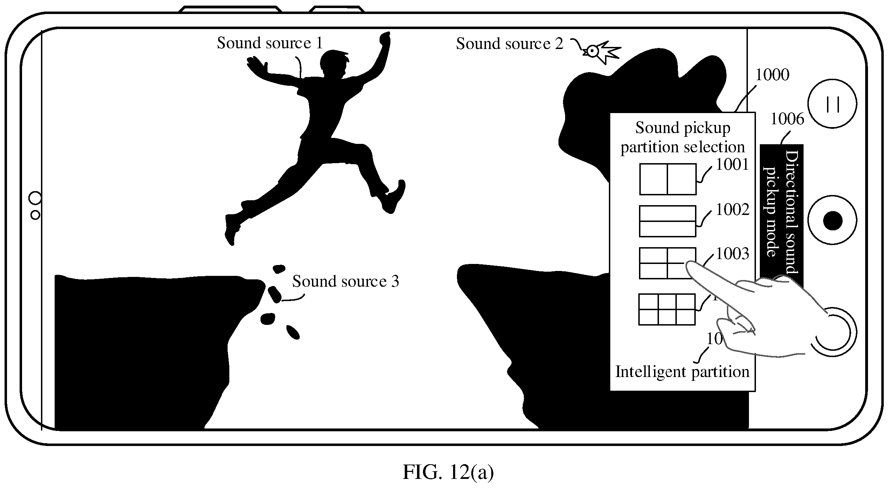

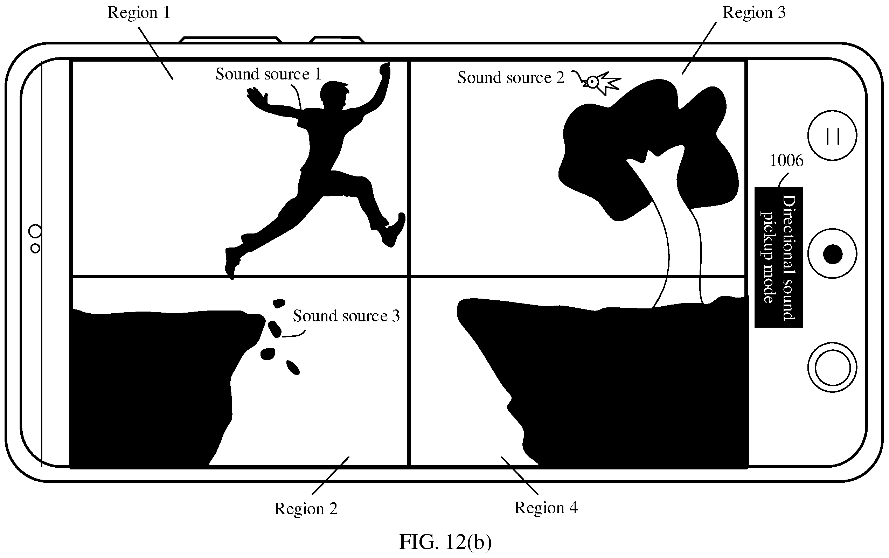

For example, it is assumed that after detecting the operation of selecting the directional sound pickup function option by the user, the mobile phone displays a plurality of sound pickup partition options shown in FIG. 12(a). The operation of selecting the first sound pickup partition option by the user is, for example, an operation of tapping, by the user, a four-partition option 1003 in a sound pickup partition selection box 1000 on an interface shown in FIG. 12(a). Further, after detecting the operation of selecting the four-partition option 1003 shown in FIG. 12(a) by the user, the mobile phone displays an interface shown in FIG. 12(b). As shown in FIG. 12(b), the mobile phone divides the viewfinder frame into four parts: an upper left part, a lower left part, an upper right part, and a lower right part (a region 1, a region 2, a region 3, and a region 4 shown in FIG. 12(b)) in a four-partition division manner shown in the four-partition option 1003, to identify positions of the four partitions in the viewfinder frame, so that the user can subsequently select a directional sound pickup region.

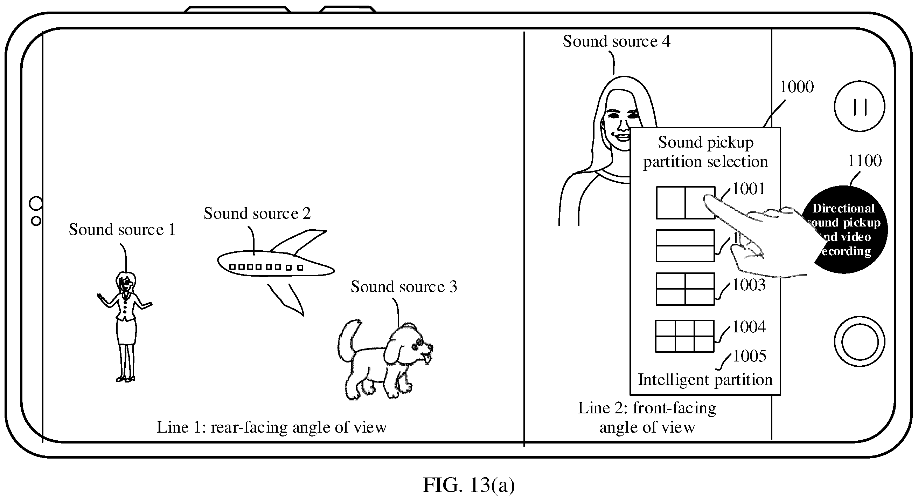

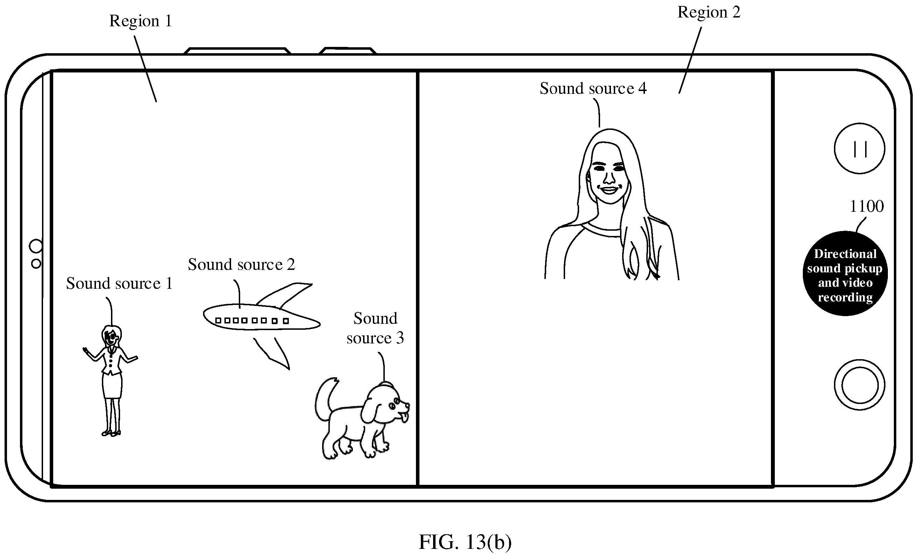

For another example, it is assumed that after detecting the operation of selecting the directional sound pickup function option by the user, the mobile phone displays a plurality of sound pickup partition options shown in FIG. 13(a). The operation of selecting the first sound pickup partition option by the user is, for example, an operation of tapping, by the user, a left-right two-partition option 1001 in a sound pickup partition selection box 905 on an interface shown in FIG. 13(a). Further, after detecting the operation of selecting the left-right two-partition option 1001 shown in FIG. 13(a) by the user, the mobile phone displays an interface shown in FIG. 13(b). As shown in FIG. 13(b), the mobile phone divides the viewfinder frame into two parts: a left part and a right part (a region 1 and a region 2 shown in FIG. 13(b)) in a left-right two-partition division manner, to identify positions of the two partitions in the viewfinder frame, so that the user can subsequently select a directional sound pickup region.

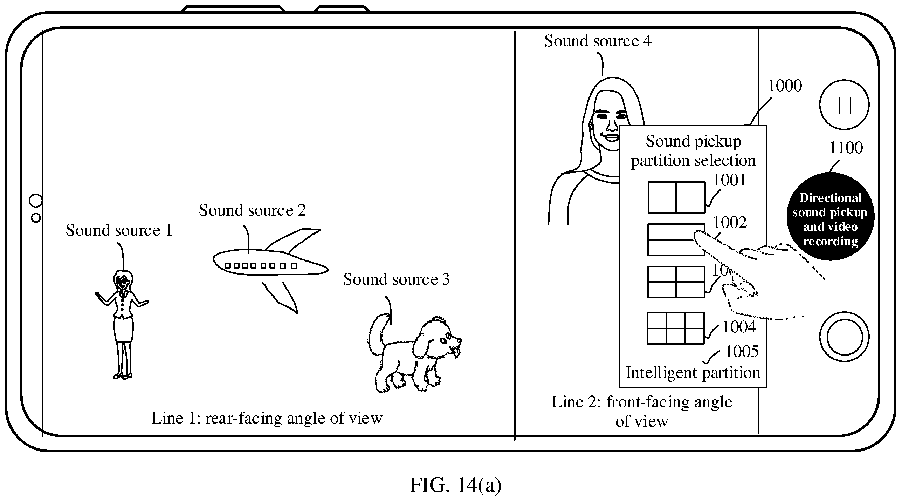

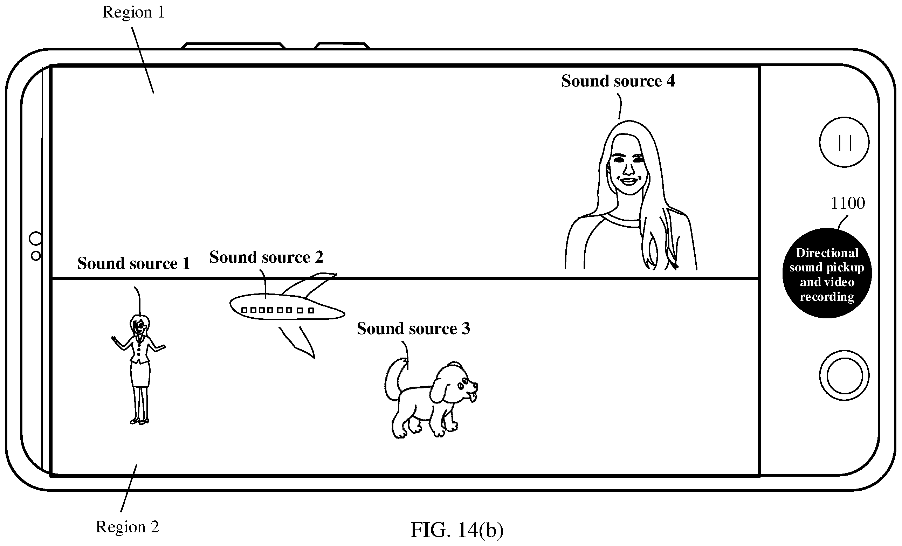

For another example, it is assumed that after detecting the operation of selecting the directional sound pickup function option by the user, the mobile phone displays a plurality of sound pickup partition options shown in FIG. 14(a). The operation of selecting the first sound pickup partition option by the user is, for example, an operation of tapping, by the user, an upper-lower two-partition option 1002 in a sound pickup partition selection box 905 on an interface shown in FIG. 14(a). Further, after detecting the operation of selecting the upper-lower two-partition option 1002 shown in FIG. 14(a) by the user, the mobile phone displays an interface shown in FIG. 14(b). As shown in FIG. 14(b), the mobile phone divides the viewfinder frame into two parts: an upper part and a lower part (a region 1 and a region 2 shown in FIG. 14(b)) in an upper-lower two-partition division manner, to identify positions of the two partitions in the viewfinder frame, so that the user can subsequently select a directional sound pickup region.

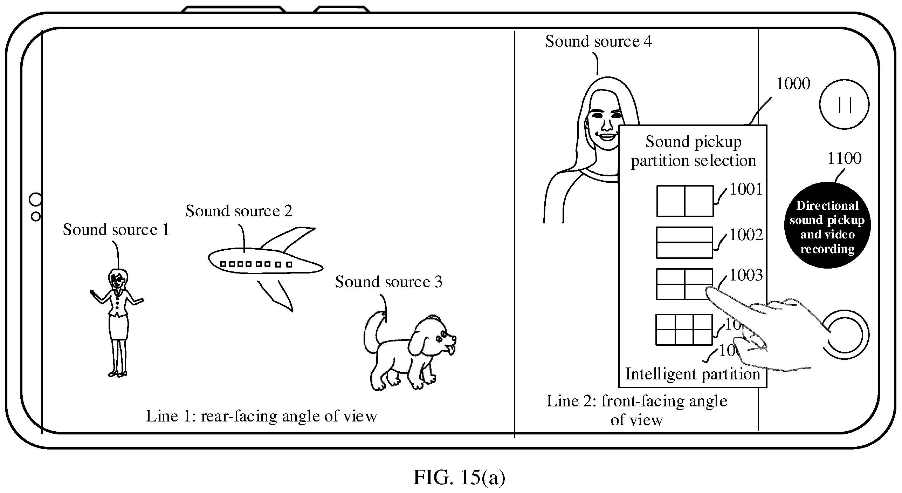

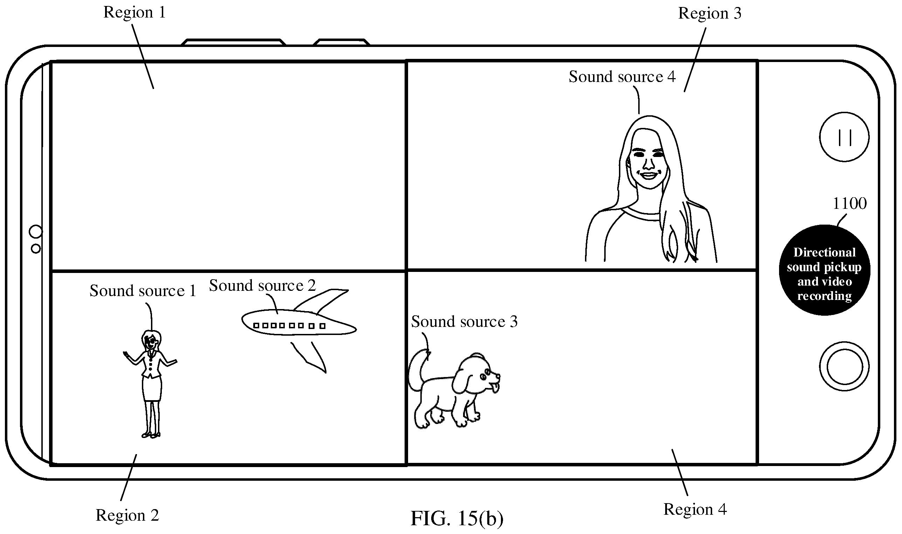

For another example, it is assumed that after detecting the operation of selecting the directional sound pickup function option by the user, the mobile phone displays a plurality of sound pickup partition options shown in FIG. 15(a). The operation of selecting the first sound pickup partition option by the user is, for example, an operation of tapping, by the user, a four-partition option 1003 in a sound pickup partition selection box 905 on an interface shown in FIG. 15(a). Further, after detecting the operation of selecting the four-partition option 1003 shown in FIG. 15(a) by the user, the mobile phone displays an interface shown in FIG. 15(b). As shown in FIG. 15(b), the mobile phone divides the viewfinder frame into four parts: an upper left part, a lower left part, an upper right part, and a lower right part (a region 1, a region 2, a region 3, and a region 4 shown in FIG. 15(b)) in a four-partition division manner, to identify positions of the two partitions in the viewfinder frame, so that the user can subsequently select a directional sound pickup region.

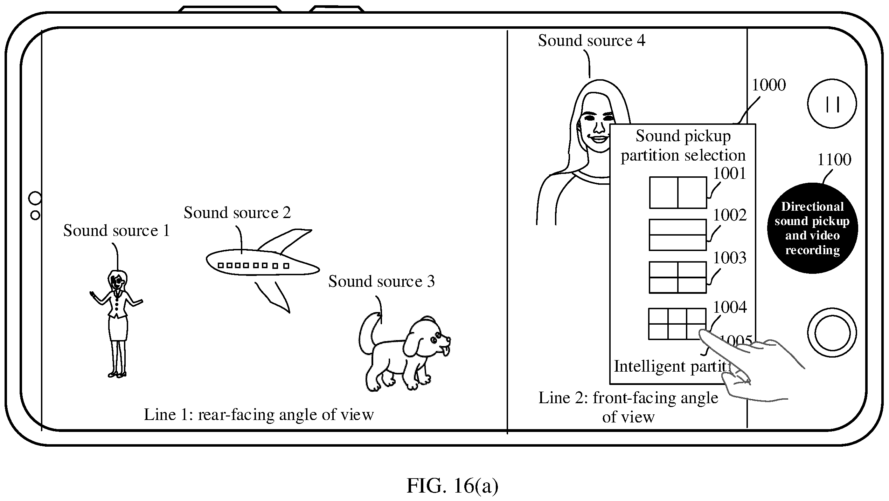

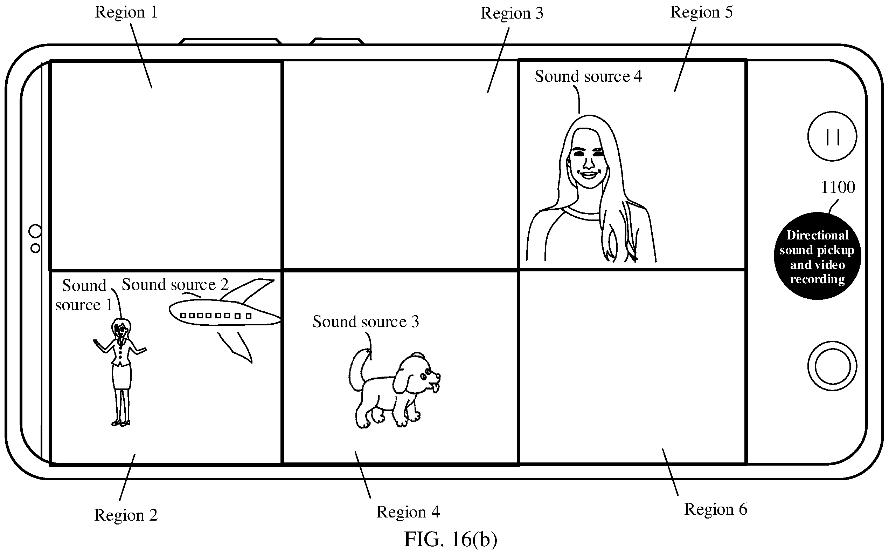

For another example, it is assumed that after detecting the operation of selecting the directional sound pickup function option by the user, the mobile phone displays a plurality of sound pickup partition options shown in FIG. 16(a). The operation of selecting the first sound pickup partition option by the user is, for example, an operation of tapping, by the user, a six-partition option 1004 in a sound pickup partition selection box 905 on an interface shown in FIG. 16(a). Further, after detecting the operation of selecting the six-partition option 1004 shown in FIG. 16(a) by the user, the mobile phone displays an interface shown in FIG. 16(b). As shown in FIG. 16(b), the mobile phone divides the viewfinder frame into six parts: an upper left part, a lower left part, an upper middle part, a lower middle part, an upper right part, and a lower right part (a region 1, a region 2, a region 3, a region 4, a region 5, and a region 6 shown in FIG. 16(b)) in a six-partition division manner, to identify positions of the two partitions in the viewfinder frame, so that the user can subsequently select a directional sound pickup region.

In some embodiments, in a case in which the mobile phone directly displays the identifier of the intelligent partition division manner on the video recording preview interface after detecting the operation of selecting the directional sound pickup function option by the user, in a possible implementation, the mobile phone may divide the viewfinder frame into a plurality of regions based on a plurality of target shot objects in the viewfinder frame. Each region includes one target shot object.

In some other embodiments, it is assumed that the first sound pickup partition option is an intelligent partition option. After the mobile phone detects the operation of selecting the first sound pickup partition option by the user, in a possible implementation, the mobile phone may divide the viewfinder frame into a plurality of regions based on a plurality of target shot objects in the viewfinder frame. Each region includes one target shot object.

For example, the mobile phone may divide the viewfinder frame into a plurality of regions based on orientations of the plurality of target shot objects in the viewfinder frame relative to the mobile phone and/or importance degrees of the plurality of target shot objects. The orientations of the plurality of target shot objects relative to the mobile phone may be approximate directions, or may be precise directions. This is not limited in embodiments of this application. In some examples, an importance degree of a target shot object represents a degree to which the target shot object is concerned by the user in a current scenario. The importance degree of the target shot object is related to one or more of the following: a historical sound pickup record, a sound pickup scenario type, and a target type.

In some examples, after the viewfinder frame is divided into a plurality of regions, each region includes one target shot object.

In some examples, after the viewfinder frame is divided into a plurality of regions, one target shot object corresponds to one audio channel.

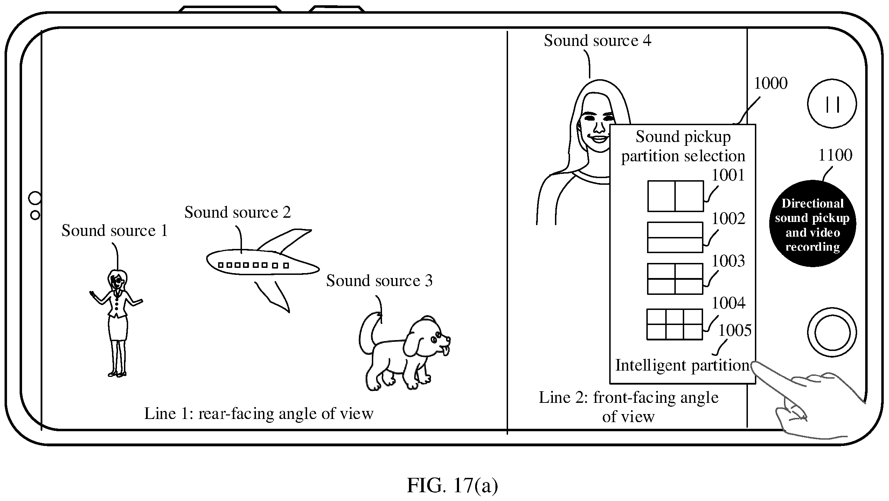

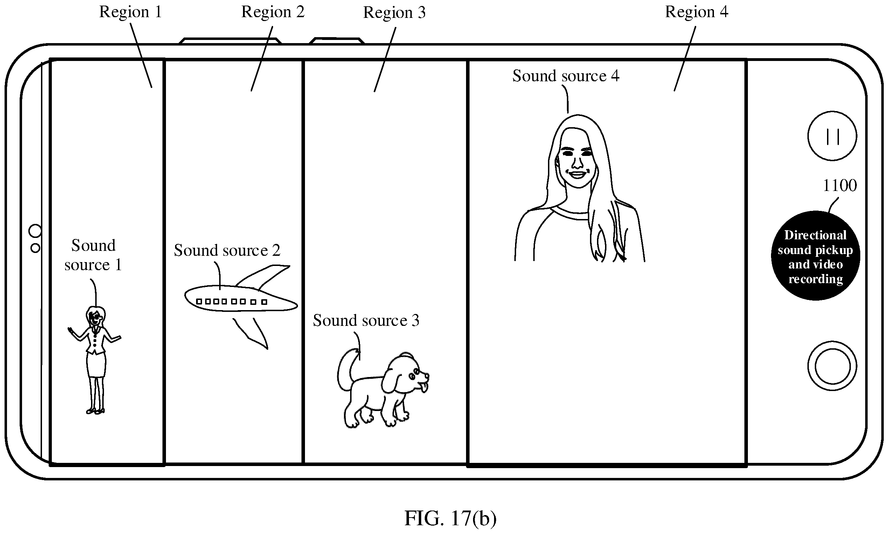

For example, it is assumed that after detecting the operation of selecting the directional sound pickup function option by the user, the mobile phone displays a plurality of sound pickup partition options shown in FIG. 17(a). The operation of selecting the first sound pickup partition option by the user is, for example, an operation of tapping, by the user, an intelligent partition option 1005 in a sound pickup partition selection box 905 on an interface shown in FIG. 17(a). Further, after detecting the operation of selecting the intelligent partition option 1005 shown in FIG. 17(a) by the user, the mobile phone displays an interface shown in FIG. 17(b). As shown in FIG. 17(b), the mobile phone divides the viewfinder frame into a region 1, a region 2, a region 3, and a region 4 based on a plurality of target shot objects in the viewfinder frame, and the region 1, the region 2, the region 3, and the region 4 respectively include a sound source 1, a sound source 2, a sound source 3, and a sound source 4 of target shot objects.

In another possible implementation, the mobile phone may divide the viewfinder frame into a plurality of regions based on a target shot object that makes a sound and that is collected by the mobile phone in the plurality of target shot objects in the viewfinder frame. Each region includes one target shot object that makes a sound. In some examples, one target shot object corresponds to one audio channel.

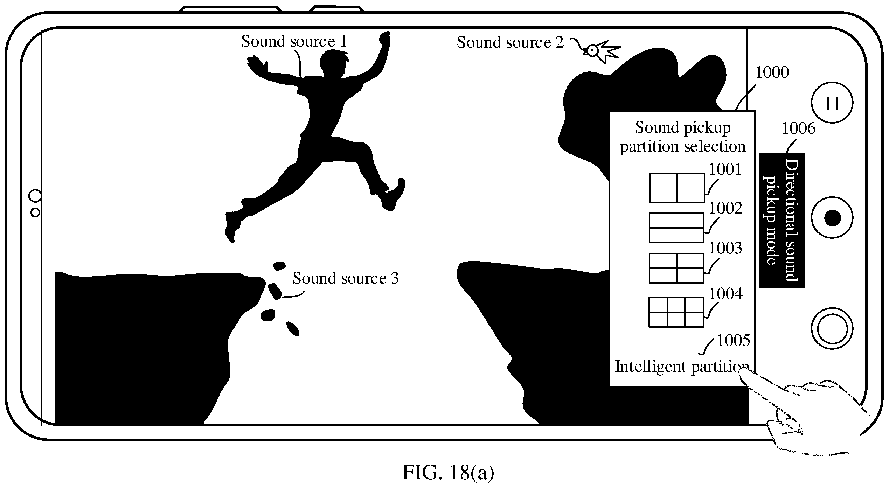

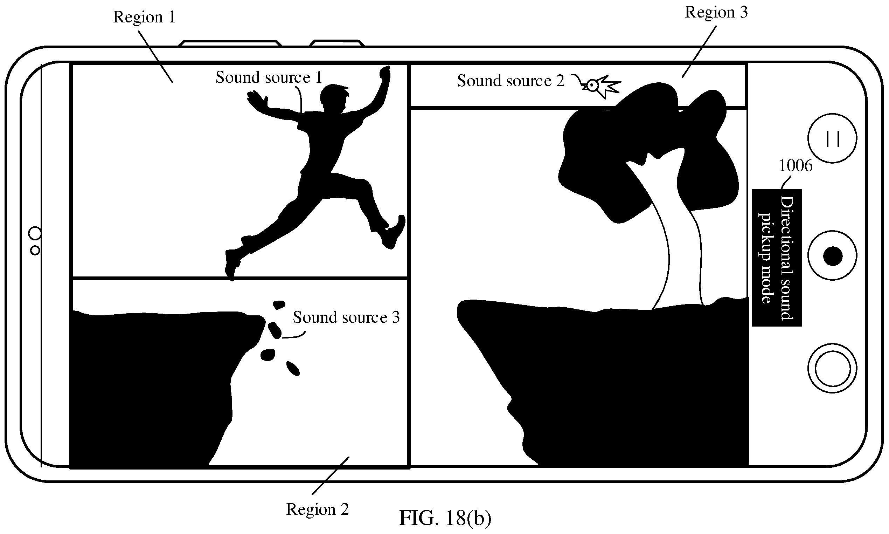

For example, it is assumed that after detecting the operation of selecting the directional sound pickup function option by the user, the mobile phone displays a plurality of sound pickup partition options shown in FIG. 18(a). The operation of selecting the first sound pickup partition option by the user is, for example, an operation of tapping, by the user, an intelligent partition option 1005 in a sound pickup partition selection box 1000 on an interface shown in FIG. 18(a). Further, after detecting the operation of selecting the intelligent partition option 1005 shown in FIG. 18(a) by the user, the mobile phone displays an interface shown in FIG. 18(b). As shown in FIG. 18(b), the mobile phone divides the viewfinder frame into a region 1, a region 2, and a region 3 based on a target shot object that makes a sound in a plurality of target shot objects in the viewfinder frame, and the region 1, the region 2, and the region 3 respectively include a sound source 1, a sound source 2, and a sound source 3 of target shot objects that make a sound.

It should be noted that the foregoing basis for performing intelligent partitioning is merely used as an example. A specific basis and method for performing intelligent partitioning are not limited in embodiments of this application. The mobile phone may further perform intelligent partitioning on the viewfinder frame based on other related information by using another method.

In some embodiments, if the mobile phone does not detect (for example, does not detect within a preset time period) an operation of selecting a sound pickup partition option by the user, the mobile phone enters the omnidirectional sound pickup mode. The mobile phone in the omnidirectional sound pickup mode may perform video shooting on the target shot object in the viewfinder frame, and may collect all audios in the current environment without difference.

S704: After detecting an operation of selecting a first region (or a first target shot object) in the viewfinder frame by the user, the mobile phone obtains, during video shooting, an audio corresponding to the first region (or a region in which the first target shot object is located).

For example, the operation of selecting the first region in the viewfinder frame by the user is an operation of tapping, by the user, a region corresponding to a first region identifier in a sound pickup partition identifier corresponding to the first sound pickup partition option.

In some embodiments, if the mobile phone is in the single-channel video mode, the mobile phone may perform processing such as video encoding on a collected single channel of video image, to generate and save a video file. A plurality of target shot objects in the single channel of video picture respectively correspond to different shooting angles of view.

In some other embodiments, if the mobile phone is in the multi-channel video mode, the mobile phone may perform processing such as video encoding on a plurality of channels of video images that are collected, to generate and save a video file. In some examples, the plurality of channels of video pictures correspond to a same video file. In some other embodiments, each channel of video picture corresponds to a video file. In this way, during subsequent video playing, the mobile phone may separately play one channel of video picture. A plurality of target shot objects in the plurality of channels of video pictures respectively correspond to different shooting angles of view.

In some embodiments, when detecting an operation of starting image shooting by the user, the mobile phone starts to shoot a video, saves a responded image and audio, and may generate a responded video. The operation of selecting the first region (or the first target shot object) may be performed before the image shooting operation, or the operation of selecting the first region (or the first target shot object) may be performed after the image shooting operation, or the operation of selecting the first region (or the first target shot object) and the image shooting operation are a same operation.

It should be noted that, FIG. 7A merely uses an example in which the mobile phone shoots a video and obtains the audio corresponding to the first region after detecting the operation of selecting the first region in the viewfinder frame by the user. In some other embodiments, after detecting the operation of selecting the first region in the viewfinder frame by the user, the mobile phone may alternatively not shoot a video, but obtain only the audio corresponding to the first region.

The audio corresponding to the first region includes a sound signal from a target shot object in the first region.

In some embodiments, the audio corresponding to the first region includes a sound signal of one target shot object.

For example, the operation of selecting the first region in the viewfinder frame by the user is an operation of tapping, by the user, the region 1, the region 2, or the region 3 on the interface shown in FIG. 12(b). Further, after detecting the operation of tapping, by the user, the region 1 on the interface shown in FIG. 12(b), the mobile phone performs video shooting on target shot objects (including all target shot objects in the region 1, the region 2, the region 3, and the region 4) in the viewfinder frame, and collects a sound signal corresponding to the region 1 (namely, a sound signal of the sound source 1 shown in FIG. 12(b)). Alternatively, after detecting the operation of tapping, by the user, the region 3 on the interface shown in FIG. 12(b), the mobile phone performs video shooting on target shot objects (including all target shot objects in the region 1, the region 2, the region 3, and the region 4) in the viewfinder frame, and collects a sound signal corresponding to the region 3 (namely, a sound signal of the sound source 2 shown in FIG. 12(b)). Alternatively, after detecting the operation of tapping, by the user, the region 2 on the interface shown in FIG. 12(b), the mobile phone performs video shooting on target shot objects (including all target shot objects in the region 1, the region 2, the region 3, and the region 4) in the viewfinder frame, and collects a sound signal corresponding to the region 2 (namely, a sound signal of the sound source 3 shown in FIG. 12(b)).

For another example, the operation of selecting the first region in the viewfinder frame by the user is an operation of tapping, by the user, the region 1, the region 2, or the region 3 on the interface shown in FIG. 17(b). Further, after detecting the operation of tapping, by the user, the region 1 on the interface shown in FIG. 17(b), the mobile phone performs video shooting on target shot objects (including all target shot objects in the region 1, the region 2, the region 3, and the region 4) in the viewfinder frame, and collects a sound signal corresponding to the region 1 (namely, a sound signal of the sound source 1 shown in FIG. 17(b)). Alternatively, after detecting the operation of tapping, by the user, the region 2 on the interface shown in FIG. 17(b), the mobile phone performs video shooting on target shot objects (including all target shot objects in the region 1, the region 2, the region 3, and the region 4) in the viewfinder frame, and collects a sound signal corresponding to the region 2 (namely, a sound signal of the sound source 2 shown in FIG. 17(b)). Alternatively, after detecting the operation of tapping, by the user, the region 3 on the interface shown in FIG. 17(b), the mobile phone performs video shooting on target shot objects (including all target shot objects in the region 1, the region 2, the region 3, and the region 4) in the viewfinder frame, and collects a sound signal corresponding to the region 3 (namely, a sound signal of the sound source 3 shown in FIG. 17(b)). Alternatively, after detecting an operation of tapping, by the user, the region 4 on the interface shown in FIG. 17(b), the mobile phone performs video shooting on target shot objects (including all target shot objects in the region 1, the region 2, the region 3, and the region 4) in the viewfinder frame, and collects a sound signal corresponding to the region 4 (namely, a sound signal of the sound source 4 shown in FIG. 17(b)).

In some other embodiments, the audio corresponding to the first region includes sound signals of a plurality of target shot objects.

For example, the operation of selecting the first region in the viewfinder frame by the user is an operation of tapping, by the user, the region 2 on the interface shown in FIG. 15(b). Further, after detecting the operation of tapping, by the user, the region 2 on the interface shown in FIG. 15(b), the mobile phone performs video shooting on target shot objects (including all target shot objects in the region 1, the region 2, the region 3, and the region 4) in the viewfinder frame, and collects a sound signal corresponding to the region 2 (namely, sound signals of the sound source 1, the sound source 2, and the sound source 3 shown in FIG. 15(b)).

For another example, the operation of selecting the first region in the viewfinder frame by the user is an operation of tapping, by the user, the region 2 on the interface shown in FIG. 16(b). Further, after detecting the operation of tapping, by the user, the region 2 on the interface shown in FIG. 16(b), the mobile phone performs video shooting on target shot objects (including all target shot objects in the region 1, the region 2, the region 3, the region 4, the region 5, and the region 6) in the viewfinder frame, and collects a sound signal corresponding to the region 2 (namely, sound signals of the sound source 1 and the sound source 2 shown in FIG. 16(b)).

In some embodiments, when the audio corresponding to the first region includes sound signals of a plurality of target shot objects, the sound signals of the plurality of target shot objects may be a same channel of audio stream, or may be a plurality of channels of audio streams. This is not limited in embodiments of this application.

In an example, the mobile phone may detect a touch operation (for example, the operation of selecting the first region) of the user by using a touch sensor disposed on the touchscreen, and transfer detected touch operation-related data (for example, information such as a touch position, touch strength, a contact area, and touch duration) to a processor of the mobile phone. In an example, further, the mobile phone (for example, a system on a chip (system on a chip, SOC) in the processor of the mobile phone) may parse the touch operation-related data, to obtain data related to a directional sound pickup region (for example, the first region), for example, including a shooting angle of view corresponding to the directional sound pickup region, a range of the directional sound pickup region in the viewfinder frame of the camera, and an image feature within a target range, so as to determine a position of a target shot object in a region selected by the user.

Further, in some embodiments, the mobile phone (for example, a DSP in the processor of the mobile phone) may directionally obtain, based on the data related to the directional sound pickup region (for example, the first region), an audio corresponding to the directional sound pickup region (for example, the first region).

In an example, that the mobile phone directionally obtains an audio corresponding to the first region may include: The mobile phone may omnidirectionally pick up audios by using a plurality of microphones, and determine a position of each sound source target in the current environment. Then, the mobile phone performs, based on the position of the target shot object in the region selected by the user, audio signal processing on the omnidirectionally picked-up audios, to obtain an audio of a target shot object in the first region selected by the user. For example, the mobile phone may enhance, according to a preset weight strategy, an audio signal corresponding to a target shot object within a range of the directional sound pickup region (for example, the first region), and suppress an audio signal corresponding to a target shot object outside the range of the directional sound pickup region (for example, the first region), to achieve an objective of directional sound pickup.

For example, the mobile phone (for example, the DSP in the processor of the mobile phone) may omnidirectionally pick up audios by using a plurality of microphones, to obtain spectrum features and information about a phase difference between audio signals within the range of the directional sound pickup region (for example, the first region), and spectrum features and information about a phase difference between audio signals outside the range of the directional sound pickup region (for example, the first region). For example, when omnidirectionally picking up the audio signals, the plurality of microphones do not enhance/weaken strength of the picked-up audio signals. In addition, the mobile phone (for example, the DSP in the processor of the mobile phone) may enhance, based on the position of the target shot object in the region selected by the user and according to the preset weight strategy, strength of an audio signal corresponding to the position of the target shot object in the region selected by the user, and suppress intensity of an audio signal corresponding to another target shot object in the current environment, so that a sound intensity difference between a target shot object in a focus region and a target shot object in a non-focus region is greater than a preset threshold (for example, 10 db), to achieve an objective of directional sound pickup.

In another example, that the mobile phone directionally obtains an audio corresponding to the first region may include: The mobile phone controls, based on a shooting angle of view corresponding to the directional sound pickup region (for example, the first region), one or more first microphones to pick up an audio signal of a target shot object within a shooting angle of view range of the directional sound pickup region (for example, the first region), and controls another microphone not to pick up an audio signal of a target shot object outside the shooting angle of view range of the directional sound pickup region (for example, the first region), to achieve an objective of directional sound pickup. The first microphone corresponds to a target shot object within a range of the directional sound pickup region (for example, the first region).

Further, in a process in which the mobile phone shoots a video and obtains the audio corresponding to the first region in response to the operation of selecting the first region in the viewfinder frame by the user, it is assumed that the mobile phone receives a zooming operation performed by the user on a specific target or a specific region (for example, a second region, where the second region is different from the first region) in the viewfinder frame of the camera. In a possible implementation, the mobile phone may adjust a focus of video shooting and audio recording to the second region in real time, obtain and enhance (for example, increase by a specific multiple) intensity of a sound corresponding to the second region, and/or weaken (for example, decrease by a specific multiple) intensity of another sound. In another possible implementation, the mobile phone may adjust only a focus of video shooting to the second region, but keep a focus region of current audio recording unchanged.

It should be noted that, in embodiments of this application, in the process in which the mobile phone shoots a video and obtains the audio corresponding to the first region in response to the operation of selecting the first region in the viewfinder frame by the user, it is assumed that the mobile phone detects movement of one or more specific target shot objects (for example, persons) in the viewfinder frame. In a possible implementation, the mobile phone may track and obtain sound signals of the one or more specific target shot objects in real time. Optionally, the mobile phone may further track and shoot the one or more specific target shot objects in real time.

For example, it is assumed that the viewfinder frame includes a first target and a second target, the first target is located in the first region in the viewfinder frame, and the second target is located in the second region of the viewfinder frame. The mobile phone shoots a video and obtains an audio of the first target in response to the operation of selecting the first region in the viewfinder frame by the user. It is assumed that in a process in which the mobile phone shoots a video and obtains the audio of the first target, the first target moves towards the second region, and the second target moves towards the first region. In this case, because the first target is a target concerned by the user, the mobile phone tracks the first target in real time, and always directionally obtains the audio of the first target.

For another example, it is assumed that the viewfinder frame includes a first target, a second target, and a third target, the first target and the third target are located in the first region in the viewfinder frame, and the second target is located in the second region of the viewfinder frame. The mobile phone shoots a video and obtains audios of the first target and the second target in response to the operation of selecting the first region in the viewfinder frame by the user. It is assumed that in a process in which the mobile phone shoots a video and obtains audios of the first target and the second target, the first target moves towards the second region, the second target moves towards the first region, and the third target does not move. In this case, because the first target is a target concerned by the user, the mobile phone tracks the first target in real time, and always directionally obtains the audio of the first target. In addition, the mobile phone keeps directionally obtaining an audio of the third target.

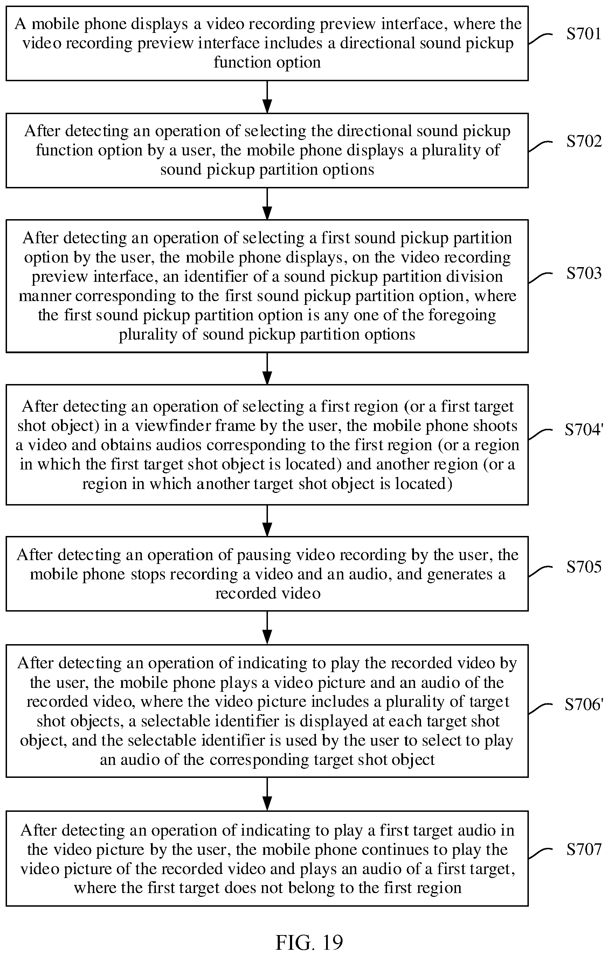

In some other embodiments, the mobile phone (for example, the DSP in the processor of the mobile phone) may further obtain an audio corresponding to another region (namely, a non-focus region) when obtaining an audio corresponding to a focus region (namely, the first region). Details are shown in S704' in FIG. 19.

S704': After detecting the operation of selecting the first region (or the first target shot object) in the viewfinder frame by the user, the mobile phone shoots a video and obtains audios corresponding to the first region (or the region in which the first target shot object is located) and another region (or a region in which another target shot object is located).

In an example, the audio corresponding to the focus region (for example, the first region) may be marked as a first mark, and the audio corresponding to the non-focus region (for example, another region other than the first region) may be marked as a second mark, to facilitate differentiation during subsequent audio data processing (for example, noise reduction and amplification).

The audio corresponding to the focus region (for example, the first region) may be collected by one microphone, or may be collected by a plurality of microphones. Similarly, the audio corresponding to the non-focus region (for example, the another region other than the first region) may be collected by one microphone, or may be collected by a plurality of microphones. This is not limited in this application.

It should be noted that, FIG. 19 merely uses an example in which the mobile phone shoots a video and obtains the audios corresponding to the first region and the another region after detecting the operation of selecting the first region in the viewfinder frame by the user. In some other embodiments, after detecting the operation of selecting the first region in the viewfinder frame by the user, the mobile phone may alternatively not shoot a video, but obtain only the audios corresponding to the first region and the another region.

It should be noted that, in embodiments of this application, regardless of whether the video mode is the multi-channel video mode or the single-channel video mode, the audio corresponding to the first region and the audio corresponding to the another region that are obtained by the mobile phone may be a same channel of audio stream, or may be a plurality of channels of audio streams. This is not limited in embodiments of this application.

It should be noted that, a specific scenario of directional sound pickup is not limited in embodiments of this application.

For example, in another possible case, S704 may specifically include: After detecting the operation of selecting the first region in the viewfinder frame by the user and an operation of starting video recording, the mobile phone shoots a video and directionally obtains the audio corresponding to the first region. In addition, S704' may specifically include: After detecting the operation of selecting the first region in the viewfinder frame by the user and an operation of starting video recording, the mobile phone shoots a video and obtains the audios corresponding to the first region and the another region.

For another example, in another possible case, the mobile phone detects, in a process of performing video shooting on the target shot object in the viewfinder frame and performing audio recording on the first target shot object, the operation of selecting the first sound pickup partition option by the user. In this case, the mobile phone performs S703 to display, on the video recording preview interface, the identifier of the sound pickup partition division manner corresponding to the first sound pickup partition option. Further, the mobile phone performs S704. After detecting the operation of selecting the first region in the viewfinder frame by the user, the mobile phone shoots a video and directionally obtains the audio corresponding to the first region. Alternatively, further, the mobile phone performs S704'. After detecting the operation of selecting the first region in the viewfinder frame by the user, the mobile phone shoots a video and obtains the audios corresponding to the first region and the another region.

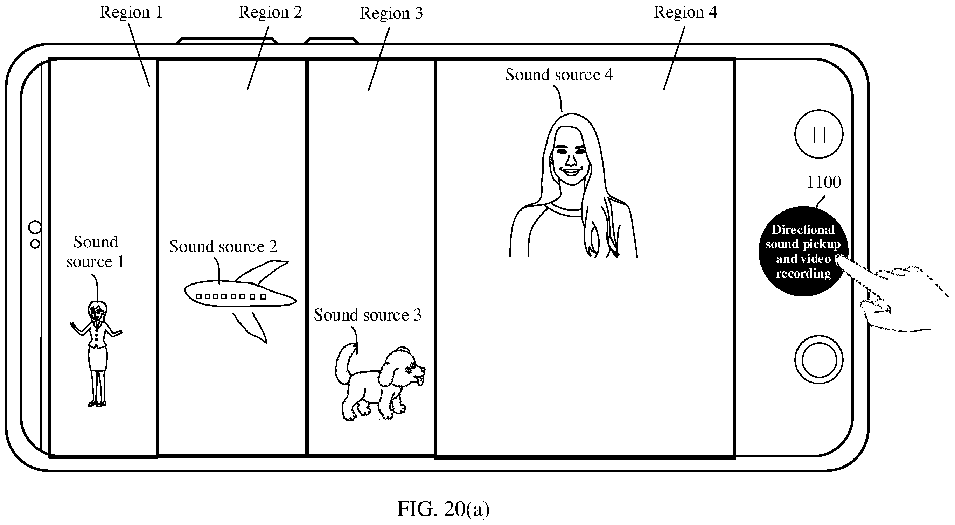

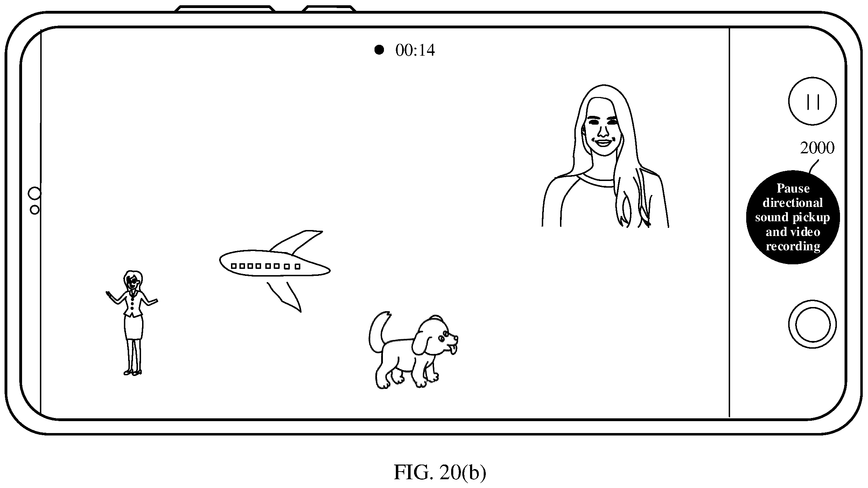

For example, the operation of starting video recording by the user may be an operation of tapping, by the user, a directional sound pickup and video recording button 1100 shown in FIG. 20(a), an operation of indicating to stop image shooting by the user by using a voice instruction, a gesture operation, another operation, or the like. This is not limited in embodiments of this application. After detecting the operation of tapping, by the user, the directional sound pickup and video recording button 1100 shown in FIG. 20(a), the mobile phone displays a directional sound pickup and video recording interface shown in FIG. 20(b). As shown in FIG. 20(b), the directional sound pickup and video recording interface includes a pause directional sound pickup and video recording button 2000, so that the user can pause/end directional sound pickup and video recording at any time based on a requirement.

In some embodiments, the first target shot object is all target shot objects in the viewfinder frame. In other words, the directional sound pickup method provided in embodiments of this application may be applied to a process in which the mobile phone switches from the omnidirectional sound pickup mode to the directional sound pickup mode at any time based on a requirement when performing omnidirectional sound pickup.

In some other embodiments, the first target shot object is different from the target shot object in the first region. In other words, the directional sound pickup method provided in embodiments of this application may be applied to a process in which the mobile phone switches a target object of directional sound pickup at any time based on a requirement when performing directional sound pickup.

In some embodiments, if the mobile phone does not detect (for example, does not detect within a preset time period) an operation of selecting a region in the viewfinder frame by the user, the mobile phone enters the omnidirectional sound pickup mode. The mobile phone in the omnidirectional sound pickup mode may perform video shooting on the target shot object in the viewfinder frame, and may collect all audios in the current environment without difference.

S705: After detecting an operation of pausing video recording by the user, the mobile phone stops recording a video and an audio, and generates a recorded video.

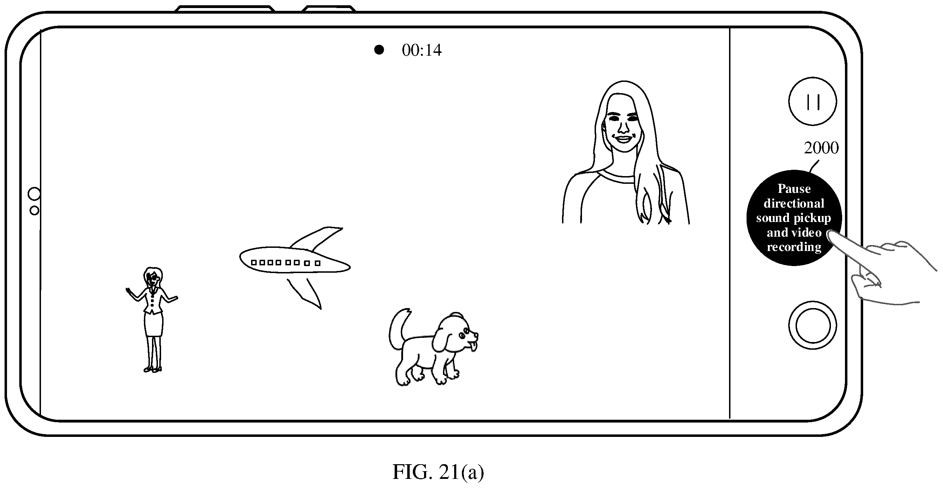

For example, the operation of pausing video recording by the user may be an operation of tapping, by the user, a pause directional sound pickup and video recording button 2000 shown in FIG. 21(a), an operation of indicating to stop image shooting by the user by using a voice instruction, a gesture operation, another operation, or the like. This is not limited in embodiments of this application.

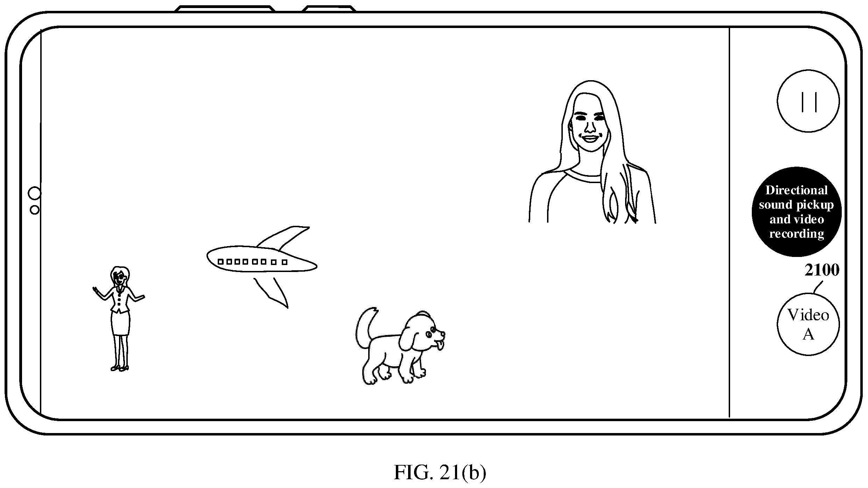

In an example, after detecting the operation of pausing video recording by the user, the mobile phone generates a recorded video and returns to the video recording preview interface or the image shooting preview interface. As shown in FIG. 21(a) and FIG. 21(b), after detecting the operation of tapping, by the user, the pause directional sound pickup and video recording button 2000 shown in FIG. 21(a), the mobile phone stops recording a video and an audio, generates a recorded video (for example, a video A), and displays a video recording preview interface shown in FIG. 21(b). As shown in FIG. 21(b), the video recording preview interface includes a thumbnail icon 2100 of a video (for example, the video A) recently recorded by the mobile phone.

The recorded video, for example, a single-channel recorded video or a multi-channel recorded video, depends on a specific video mode. The single-channel recorded video includes one channel of video picture, and the multi-channel recorded video includes a plurality of channels of video pictures.

In a case in which the mobile phone directionally obtains the audio corresponding to the first region, after the mobile phone detects the operation of pausing video recording by the user, the generated recorded video further includes one audio signal, and the audio signal comes from the target shot object in the first region.

In a case in which the mobile phone obtains both the audio corresponding to the focus region and the audio corresponding to the non-focus region, after the mobile phone detects the operation of pausing video recording by the user, the generated recorded video includes a plurality of audio signals.

In an example, the plurality of audio signals include a focus audio signal and a non-focus audio signal. The focus audio signal comes from the target shot object in the first region, and the non-focus audio signal comes from a target shot object in the another region other than the first region. The focus audio signal is marked as the first mark, and the non-focus audio signal is marked as the second mark.

In another example, the plurality of audio signals respectively come from target shot objects in a plurality of regions, and the plurality of regions include the first region. An audio signal corresponding to the first region is marked as the first mark, and audio signals corresponding to other regions are all marked as the second mark.

In a case in which the mobile phone directionally obtains the audio corresponding to the first region, further, as shown in FIG. 7A, after detecting an operation of indicating to play the recorded video by the user, the mobile phone performs S706.

S706: After detecting the operation of indicating to play the recorded video by the user, the mobile phone plays a video picture and an audio of the recorded video. The audio comes from the target shot object in the first region.

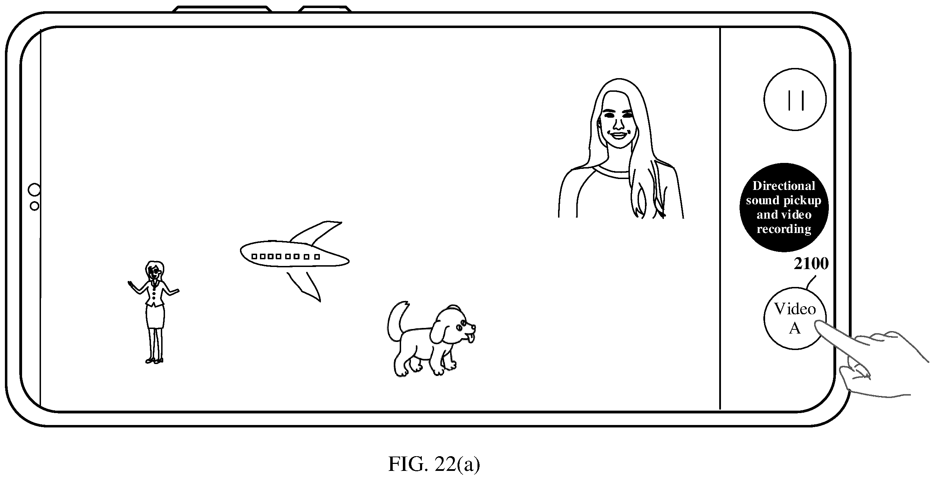

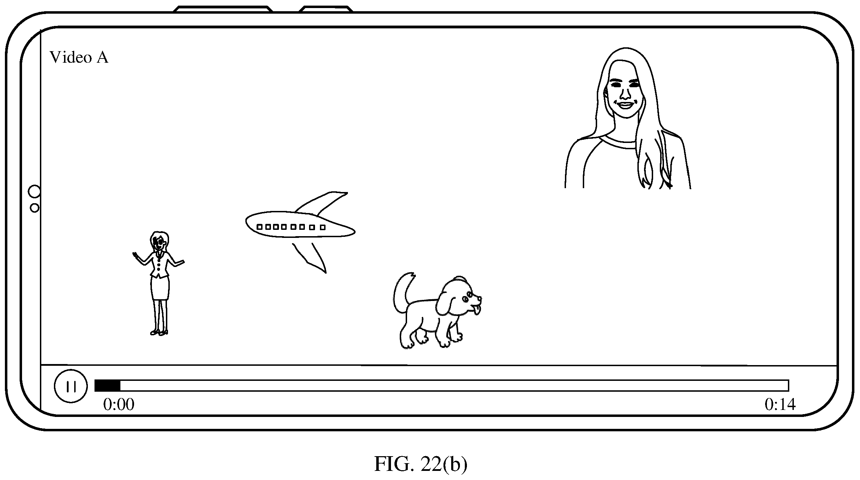

In an example, the operation of indicating to play the recorded video by the user is an operation of tapping, by the user, a thumbnail icon 2100 of a video (for example, a video A) recently recorded by the mobile phone on a video recording preview interface shown in FIG. 22(a). Further, as shown in FIG. 22(b), after detecting the operation of tapping, by the user, the thumbnail icon 2100 of the video (for example, the video A) recently recorded by the mobile phone on the video recording preview interface shown in FIG. 22(a), the mobile phone displays a video playing interface shown in FIG. 22(b), to play a video picture and an audio of the video A.

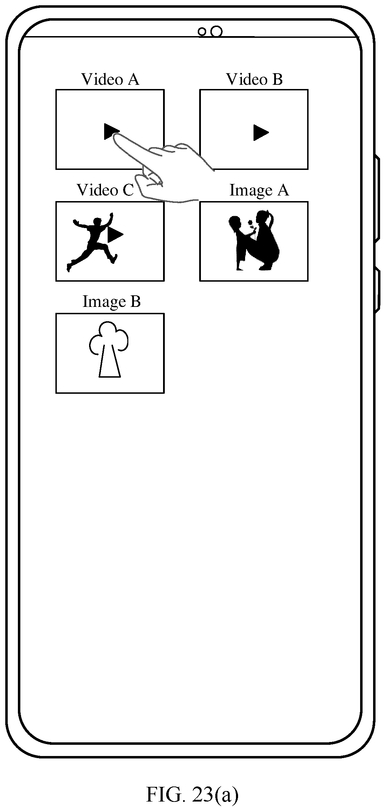

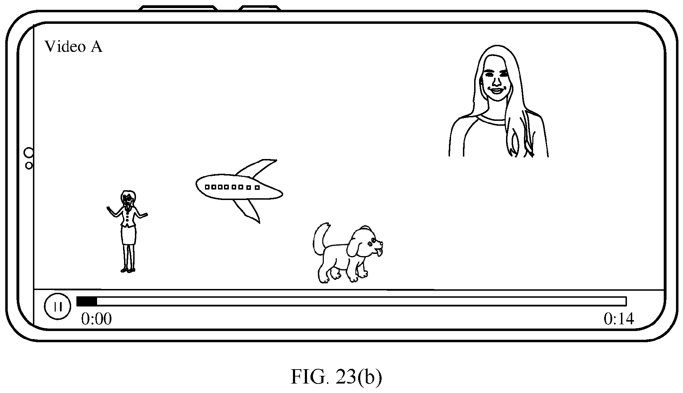

In another example, the operation of indicating to play the recorded video by the user is an operation of tapping, by the user, a thumbnail icon of a video (for example, a video A) recorded by the mobile phone in a gallery shown in FIG. 23(a). Further, as shown in FIG. 23(b), after detecting the operation of tapping, by the user, the thumbnail icon of the video (for example, a video A) recorded by the mobile phone in the gallery shown in FIG. 23(a), the mobile phone displays a video playing interface shown in FIG. 23(b), to play a video picture and an audio of the video A.

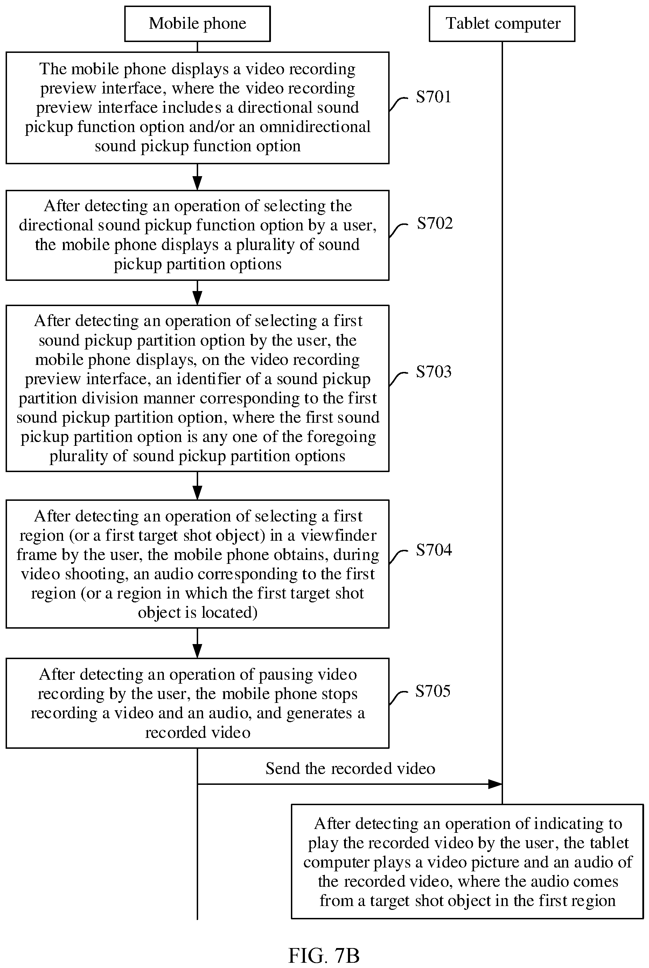

It should be noted that, FIG. 7A merely uses an example in which the mobile phone plays, in response to the operation of indicating, by the user, to play the recorded video generated by the mobile phone in S705, the recorded video generated by the mobile phone in S705. In some other embodiments, as shown in FIG. 7B, the mobile phone may further send, to another device (for example, a tablet computer shown in FIG. 7B), the recorded video generated in S705. Further, after the tablet computer detects an operation of indicating, by the user, to play the recorded video that is received, the tablet computer plays a video picture and an audio of the recorded video. The audio of the recorded video comes from a target shot object in the first region in the viewfinder frame when the mobile phone shoots the recorded video.

In addition, FIG. 7A merely uses an example in which the user selects a directional sound pickup target. In some other embodiments, the mobile phone may further automatically determine the directional sound pickup target. For example, the directional sound pickup target may alternatively be a target shot object on which the mobile phone automatically focuses in the viewfinder frame. For another example, the directional sound pickup target may alternatively be a target shot object with maximum actual sound intensity in the viewfinder frame. This is not limited in this application.

In a case in which the mobile phone obtains both the audio corresponding to the focus region and the audio corresponding to the non-focus region, further, as shown in FIG. 19, after detecting the operation of indicating to play the recorded video by the user, the mobile phone performs S706'.

S706': After detecting the operation of indicating to play the recorded video by the user, the mobile phone plays a video picture and an audio of the recorded video. The video picture includes a plurality of target shot objects, a selectable identifier is displayed at each target shot object, and the selectable identifier is used by the user to select to play an audio of the corresponding target shot object.

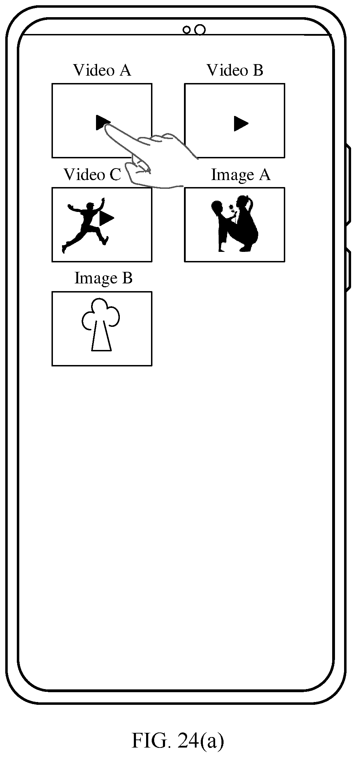

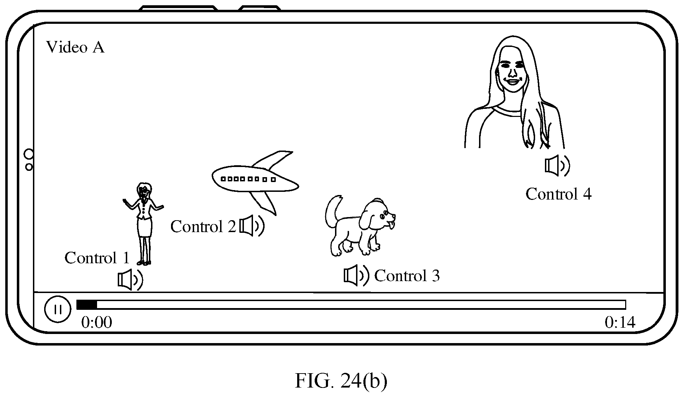

For example, there is a selectable identifier, for example, a selectable control. As shown in FIG. 24(a) and FIG. 24(b), after detecting an operation of tapping, by the user, a thumbnail icon of a video (for example, a video A) recorded by the mobile phone in a gallery shown in FIG. 24(a), the mobile phone displays a video playing interface shown in FIG. 24(b), to play a video picture and an audio of the video A. The video picture includes a plurality of target shot objects, and an audio playing speaker control (for example, a control 1, a control 2, a control 3, and a control 4 shown in FIG. 24(b)) is displayed at each target shot object.

In a possible implementation, after the mobile phone detects the operation of indicating to play the recorded video by the user, the played audio is an audio of a target shot object in the focus region (namely, the first region).

Further, in some embodiments, the mobile phone may receive a selection operation of the user on any selectable identifier among a plurality of selectable identifiers on the video picture, and switch an audio playing mode, to switch from playing only the audio of the target shot object in the focus region (namely, the first region) to playing an audio of a target shot object corresponding to the selectable identifier selected by the user.

For example, as shown in FIG. 19, the mobile phone performs the following S707.

S707: After detecting an operation of indicating to play a first target audio in the video picture by the user, the mobile phone continues to play the video picture of the recorded video and plays the audio of the first target. The first target does not belong to the first region.

For example, after detecting the operation of indicating to play the first target audio in the video picture by the user, the mobile phone stops playing the audio corresponding to the first region, and starts to play the audio of the first target.

In an example, the operation of indicating to play the first target audio in the video picture by the user is an operation of tapping, by the user, an identifier 1 on a video picture shown in FIG. 24(b), where the identifier 1 includes the first target.

In some embodiments, the mobile phone obtains both the audio corresponding to the focus region and the audio corresponding to the non-focus region, and the mobile phone sends the recorded video generated in S705 to another device (for example, the tablet computer). Further, after the tablet computer detects an operation of indicating, by the user, to play the recorded video that is received, the tablet computer plays a video picture and an audio of the recorded video. The video picture includes a plurality of target shot objects, a selectable identifier is displayed at each target shot object, and the selectable identifier is used by the user to select to play an audio of the corresponding target shot object. Further, after the tablet computer detects the operation of indicating to play the first target audio in the video picture by the user, the tablet computer may continue to play the video picture of the recorded video and play the audio of the first target. The first target does not belong to the first region in the viewfinder frame when the mobile phone shoots the recorded video.

In some other embodiments, the mobile phone may receive a selection operation of the user on any plurality of selectable identifiers among a plurality of selectable identifiers on the video picture, and switch an audio playing mode, to switch from playing only the audio of the target shot object in the focus region (namely, the first region) to playing audios of target shot objects corresponding to the plurality of selectable identifiers selected by the user.

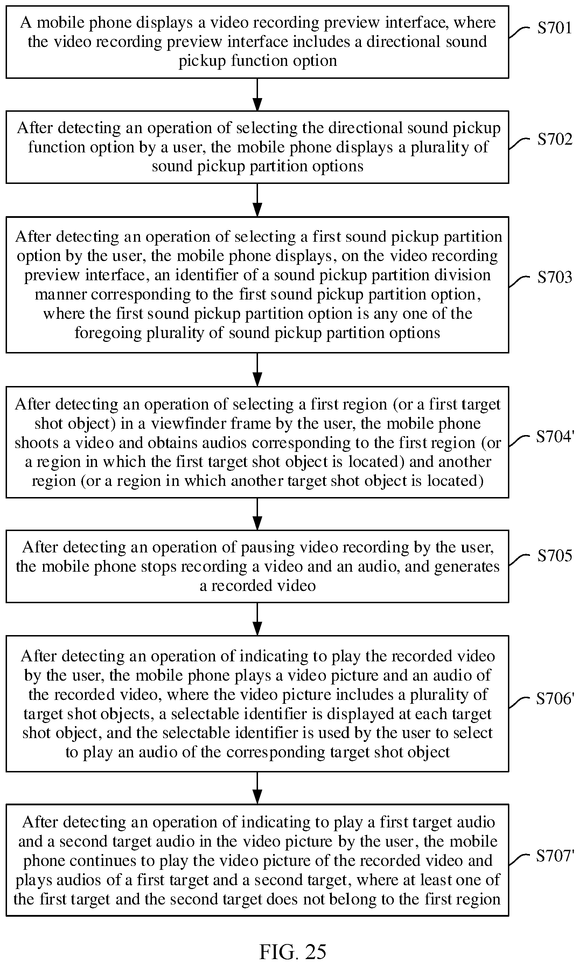

For example, as shown in FIG. 25, the mobile phone performs the following S707'.

S707': After detecting an operation of indicating to play a first target audio and a second target audio in the video picture by the user, the mobile phone continues to play the video picture of the recorded video and plays audios of the first target and the second target. At least one of the first target and the second target does not belong to the first region.

In an example, the operation of indicating to play the first target audio and the second target audio in the video picture by the user is an operation of tapping, by the user, an identifier 1 and an identifier 2 on a video picture shown in FIG. 24(b), where the identifier 1 includes the first target, and the identifier 2 includes the second target.

It may be understood that, according to the directional sound pickup method provided in embodiments of this application, a sound pickup mode supported by the electronic device is extended, so that when the user has a video recording requirement, the electronic device can switch, based on an actual sound pickup requirement of the user, a sound pickup mode required by the electronic device, for example, the omnidirectional sound pickup mode or the directional sound pickup mode. After the user selects the directional sound pickup mode, the electronic device may identify a directional sound pickup target of the user by detecting an operation of conveniently selecting a region in the viewfinder frame by the user, so that during video recording, a sound signal from a target concerned by the user is picked up in a targeted manner, and a sound signal from another target is shielded. According to the directional sound pickup method provided in embodiments of this application, more user-friendly sound pickup experience can be provided for the user.

For example, it is assumed that the user uses the electronic device to record a video or make a video call in a concert scenario. If the user selects the directional sound pickup mode and selects a target shot object concerned by the user, during video recording, the electronic device may pick up, in a targeted manner, a sound signal from a target concerned by the user (for example, a musical instrument of a performer or a host), and shield noise signals such as cheering sounds of audiences or walking sounds of staff. For example, the electronic device may control a microphone corresponding to an orientation range in which the target concerned by the user, for example, the performer or the host, is located to collect an audio signal within the orientation range, and control a microphone corresponding to an orientation range in which a stand is located not to collect an audio signal.

Further, in some embodiments, after the user selects the directional sound pickup mode, the electronic device may pick up both a sound signal from a target shot object in the focus region and a sound signal from a target shot object in another non-focus region. In this manner, when the user watches the video subsequently, an audio output solution may be adjusted at any time based on a requirement, to provide more user-friendly sound pickup experience for the user. For example, in a possible solution, the user may play only a sound of the target shot object in the focus region. In another possible solution, the user may select to play sounds of any plurality of target shot objects in the recorded video.

It should be noted that, in the foregoing embodiments of this application, that the electronic device is in the video recording scenario is merely used as an example. In a video call scenario or the like, directional sound pickup may also be performed by using a method similar to that in the foregoing embodiments of this application. For example, when the electronic device displays an image shooting interface in a video call scenario, if the electronic device detects an operation of selecting one or more target shot objects on the video call interface by the user, the electronic device may obtain only audios of the one or more target shot objects, and shield an audio of another target shot object. Alternatively, the electronic device may enhance audios of the one or more target shot objects, and weaken an audio of another target shot object. In this way, more user-friendly video call experience is provided for the user.

In addition, in the foregoing embodiments of this application, the operation of selecting the first region in the viewfinder frame by the user is merely used as an example of a manner in which the user selects the focus region and/or a focus target shot object. A specific manner in which the user selects the focus region and/or the focus target shot object is not limited in this application. For example, the user may alternatively indicate the focus region and/or the focus target shot object to the electronic device in a manner of moving a target shot object to a preset position in the viewfinder frame of the electronic device or aligning the viewfinder frame of the electronic device with a target shot object.

It should be understood that the solutions in embodiments of this application may be appropriately combined for use, and explanations or descriptions of terms in embodiments may be cross-referenced or explained in embodiments. This is not limited.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In the foregoing embodiments provided in this application, the method provided in embodiments of this application is described from the perspective in which the electronic device (for example, the mobile phone) is used as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

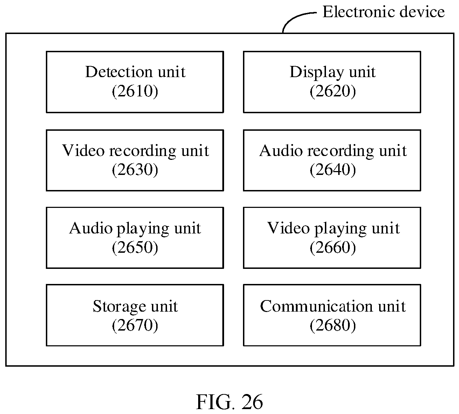

For example, when each functional module is obtained through division in an integrated manner, FIG. 26 is a block diagram of a structure of an electronic device according to an embodiment of this application. As shown in FIG. 26, the electronic device may include a detection unit 2610, a display unit 2620, a video recording unit 2630, an audio recording unit 2640, an audio playing unit 2650, a video playing unit 2660, and a storage unit 2670.

The detection unit 2610 is configured to support the electronic device in detecting a user operation and/or another event related to embodiments of this application. The display unit 2620 is configured to support the electronic device in displaying an interface, for example, displaying an image shooting preview interface, a video shooting interface, a video playing interface, a video call interface, a gallery interface, and/or another interface related to embodiments of this application. The video recording unit 2630 is configured to support the electronic device in performing video recording, including single-channel video recording, multi-channel video recording, and/or other video recording related to embodiments of this application. The audio recording unit 2640 is configured to support the electronic device in performing audio recording, including directional audio recording, omnidirectional audio recording, and/or other audio recording related to embodiments of this application. The audio playing unit 2650 is configured to support the electronic device in playing an audio, including playing an audio of a specific target shot object, playing audios of all target shot objects, and the like. The video playing unit 2660 is configured to support the electronic device in playing a video. The storage unit 2670 is configured to store computer program instructions and related data (for example, a shot video and recorded audio) that are related to embodiments of this application.

In an example, as shown in FIG. 26, the electronic device may further include a communication unit 2680, configured to communicate with another device, for example, send a shot video and/or recorded audio and/or other information related to embodiments of this application to the another device.

In an example, the communication unit 2680 may include a radio frequency circuit. Specifically, the electronic device may receive and send radio signals through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an e-mail message, a short message service, and the like.

It should be understood that each module in the electronic device may be implemented in a form of software and/or hardware. This is not specifically limited herein. In other words, an input device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

According to the context, the term "when" or "after" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "have", and their variants all mean "include but are not limited to", unless otherwise specifically emphasized in another manner.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid state disk Solid State Disk (SSD)), or the like. In a case in which no conflict occurs, the solutions in the foregoing embodiments may be combined for use.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an electronic device. Certainly, the processor and the storage medium may alternatively exist in the electronic device as discrete components.

The foregoing descriptions about implementations allow a person skilled in the art to clearly understand that, for the purpose of convenient and brief description, division of the foregoing functional modules is taken as an example for illustration. In an actual application, the foregoing functions can be allocated to different functional modules and implemented based on a requirement, that is, an inner structure of an apparatus is divided into different functional modules to implement all or some of the functions described above.

## Claims

1. A directional sound pickup method, wherein the method comprises:
detecting, by an electronic device, a first operation of a user;
displaying, by the electronic device in response to the first operation, a viewfinder frame corresponding to image shooting, wherein the viewfinder frame comprises a plurality of target shot objects, and the plurality of target shot objects comprise a first target shot object and a second target shot object;
detecting, by the electronic device, a second operation of selecting the first target shot object by the user;
shooting, by the electronic device, a video corresponding to the viewfinder frame, and obtaining a corresponding audio, wherein at a first moment at which the video is shot, an intensity of a sound corresponding to the first target shot object is D1, and an intensity of a sound corresponding to the second target shot object is D2; and
playing the audio when the video is played, wherein when the audio is played to a moment corresponding to the first moment, a sound intensity of the sound corresponding to the first target shot object is D11, and a sound intensity of the sound corresponding to the second target shot object is D11, wherein
a ratio of D11 to D1 is greater than a ratio of D21 to D2.

2. The method according to claim 1, wherein D11 and D21 are respectively the intensity of the sound of the first target shot object and the intensity of the sound of the second target shot object that are obtained by the electronic device.

3. The method according to claim 1 or 2, wherein D21 is 0.

4. The method according to any one of claims 1 to 3, wherein in a process in which the electronic device shoots the video, a position of the first target shot object changes;
at a second moment at which the video is shot, an intensity of the sound corresponding to the first target shot object is D1', an intensity of the sound corresponding to the second target shot object is D2', and the second moment is after a moment at which the position of the first target shot object changes; and
the audio is played when the video is played, wherein when the audio is played to a moment corresponding to the second moment, a sound intensity of the sound corresponding to the first target shot object is D11', and a sound intensity of the sound corresponding to the second target shot object is D11', wherein
a ratio of D11' to D1' is greater than a ratio of D21' to D2'.

5. The method according to any one of claims 1 to 3, wherein the shot video comprises an image of the first target shot object and an image of the second target shot object.

6. The method according to claim 5, wherein the method further comprises:
playing, by the electronic device, an audio of the first target shot object and an audio of the second target shot object in response to an operation of selecting, by the user, the first target shot object and the second target shot object on a video playing interface of the video.

7. The method according to any one of claims 1 to 3, wherein before the shooting, by the electronic device, a video corresponding to the viewfinder frame, and obtaining a corresponding audio, the method further comprises:
detecting, by the electronic device, an operation of selecting a directional sound pickup mode by the user.

8. The method according to claim 7, wherein the first target shot object is a target shot object on which the electronic device automatically focuses in the viewfinder frame.

9. The method according to claim 7, wherein the viewfinder frame comprises a first region and a second region, the first target shot object is located in the first region, the second target shot object is located in the second region, and the second operation is an operation of selecting the first region by the user.

10. The method according to claim 9, wherein before the electronic device detects the second operation, the method further comprises:
displaying, by the electronic device, a plurality of sound pickup partition options; and
displaying, by the electronic device, a first region mark and a second region mark in the viewfinder frame in response to an operation of selecting a first sound pickup partition option in the plurality of sound pickup partition options by the user, wherein
the second operation is an operation of tapping, by the user, a position corresponding to the first region mark.

11. The method according to claim 10, wherein the plurality of sound pickup partition options comprise one or more of the following: a two-partition option, a four-partition option, a nine-partition option, an intelligent partition option, and an irregular partition option.

12. The method according to claim 11, wherein the method further comprises:
determining, by the electronic device, the intelligent partition option based on a position of a target shot object in the viewfinder frame.

13. The method according to any one of claims 1 to 12, wherein the electronic device comprises a first camera, and the shooting, by the electronic device, a video corresponding to the viewfinder frame comprises:
shooting, by the electronic device by using the first camera, a single channel of video corresponding to the viewfinder frame.

14. The method according to any one of claims 1 to 12, wherein the electronic device comprises a first camera, and the shooting, by the electronic device, a video corresponding to the viewfinder frame comprises:
shooting, by the electronic device by using the first camera, a plurality of channels of videos corresponding to the viewfinder frame, wherein zoom ratios of the plurality of channels of videos are different.

15. The method according to any one of claims 1 to 12, wherein the electronic device comprises a first camera and a second camera, and the shooting, by the electronic device, a video corresponding to the viewfinder frame comprises:
shooting, by the electronic device by using the first camera, a first channel of video corresponding to the viewfinder frame, and shooting, by using the second camera, a second channel of video corresponding to the viewfinder frame.

16. The method according to claim 15, wherein zoom ratios of the first channel of video and the second channel of video are different.

17. The method according to any one of claims 1 to 16, wherein
the viewfinder frame is located on an image shooting preview interface in an image shooting scenario; or
the viewfinder frame is located on an image shooting interface in a video call scenario.

18. A directional sound pickup method, wherein the method comprises:
detecting, by an electronic device, a first operation of a user;
displaying, by the electronic device in response to the first operation, a viewfinder frame corresponding to image shooting, wherein the viewfinder frame comprises a plurality of target shot objects, and the plurality of target shot objects comprise a first target shot object and a second target shot object;
detecting, by the electronic device, a second operation of selecting the first target shot object by the user; and
shooting, by the electronic device, a video corresponding to the viewfinder frame, and directionally obtaining an audio of the first target shot object.

19. The method according to claim 18, wherein
when a position of the first target shot object in the viewfinder frame changes, a sound pickup direction of the electronic device changes with the first target shot object.

20. An electronic device, wherein the electronic device comprises:
a detection unit, configured to detect a first operation and a second operation of a user;
a display unit, configured to display, in response to the first operation, a viewfinder frame corresponding to image shooting, wherein the viewfinder frame comprises a plurality of target shot objects, and the plurality of target shot objects comprise a first target shot object and a second target shot object;
a video recording unit, configured to shoot, in response to the second operation of selecting the first target shot object by the user, a video corresponding to the viewfinder frame;
an audio recording unit, configured to obtain a corresponding audio when the video recording unit shoots the video corresponding to the viewfinder frame, wherein at a first moment at which the video is shot, an intensity of a sound corresponding to the first target shot object is D1, and an intensity of a sound corresponding to the second target shot object is D2;
a video playing unit, configured to play the video; and
an audio playing unit, configured to play the audio when the video is played, wherein when the audio is played to a moment corresponding to the first moment, a sound intensity of the sound corresponding to the first target shot object is D11, and a sound intensity of the sound corresponding to the second target shot object is D11, wherein
a ratio of D11 to D1 is greater than a ratio of D21 to D2.

21. The electronic device according to claim 20, wherein the shot video comprises an image of the first target shot object and an image of the second target shot object.

22. The electronic device according to claim 20 or 21, wherein
the detection unit is further configured to detect an operation of selecting, by the user, the first target shot object and the second target shot object on a video playing interface of the video; and
the audio playing unit is further configured to play an audio of the first target shot object and an audio of the second target shot object in response to the operation of selecting, by the user, the first target shot object and the second target shot object on the video playing interface of the video.

23. The electronic device according to any one of claims 20 to 22, wherein
the detection unit is further configured to detect an operation of selecting a directional sound pickup mode by the user.

24. The electronic device according to claim 23, wherein
the display unit is further configured to: display a plurality of sound pickup partition options, and display a first region mark and a second region mark in the viewfinder frame in response to an operation of selecting a first sound pickup partition option in the plurality of sound pickup partition options by the user, wherein
the second operation is an operation of tapping, by the user, a position corresponding to the first region mark.

25. The electronic device according to any one of claims 20 to 24, wherein in a process in which the video is shot, a position of the first target shot object changes;
at a second moment at which the video is shot, an intensity of the sound corresponding to the first target shot object is D1', an intensity of the sound corresponding to the second target shot object is D2', and the second moment is after a moment at which the position of the first target shot object changes; and
the audio is played when the video is played, wherein when the audio is played to a moment corresponding to the second moment, a sound intensity of the sound corresponding to the first target shot object is D11', and a sound intensity of the sound corresponding to the second target shot object is D11', wherein
a ratio of D11' to D1' is greater than a ratio of D21' to D2'.

26. An electronic device, wherein the electronic device comprises:
a camera, configured to collect video data;
a microphone, configured to collect audio data;
a display, configured to display an interface;
a speaker, configured to play an audio;
a memory, configured to store computer program instructions; and
a processor, configured to execute the computer program instructions, to support the electronic device in implementing the method according to any one of claims 1 to 19.

27. A computer-readable storage medium, wherein the computer-readable storage medium stores computer program instructions, and when the computer program instructions are executed by a processing circuit, the method according to any one of claims 1 to 19 is implemented.

28. A computer program product comprising instructions, wherein when the computer program product runs on a computer, the computer is enabled to perform the method according to any one of claims 1 to 19.

29. A chip system, wherein the chip system comprises a processing circuit and a storage medium, the storage medium stores computer program instructions, and when the computer program instructions are executed by the processing circuit, the method according to any one of claims 1 to 19 is implemented.
